(19)

Europäisches
Patentamt
European
Patent Office
Office européen
des brevets

(11)  **EP 2 500 711 A2**

(12)  **EUROPEAN PATENT APPLICATION**

(43) Date of publication:
**19.09.2012 Bulletin 2012/38**

(51) Int Cl.:
*G01N 21/35* (2006.01)   *G01N 21/76* (2006.01)

(21) Application number: **12001591.2**

(22) Date of filing: **08.03.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.03.2011  JP 2011055591**

(71) Applicant: HORIBA, Ltd.
**Minami-ku
Kyoto-shi
Kyoto 601-8510 (JP)**

(72) Inventors:
• **Okada, Hideya**
**Kyoto-shi
Kyoto 601-8510 (JP)**
• **Yonetani, Yashuhiro**
**Kyoto-shi
Kyoto 601-8510 (JP)**
• **Miyawaki, Daisuke**
**Kyoto-shi
Kyoto 601-8510 (JP)**

(74) Representative: **Müller - Hoffmann & Partner**
**Patentanwälte
Innere Wiener Strasse 17
81667 München (DE)**

(54)  **Analyzing apparatus**

(57)     Provided is an analyzing apparatus (1, 2) capable of displaying analysis values so as to allow a user to easily and visually recognize an analysis value related to a desired component item. The analyzing apparatus (1, 2) for analyzing a sample gas and displaying an analysis result in an image includes an analyzing portion (210) for measuring and analyzing a concentration of a predetermined component in the sample gas and calculating analysis values related to items of the predetermined component, a displaying portion (220) for displaying the analysis values in an image, an operation inputting portion (230) for receiving an input operation of a user, and an analysis result display control portion (240) for displaying the analysis values related to each of the items of the predetermined component on a screen of the displaying portion in a displaying mode depending on the input operation received by the operation inputting portion (230), and the analysis result display control portion (240) includes a display number setting portion (241) for setting a number of the analysis values to be displayed on the displaying portion (220) depending on the input operation received by the operation inputting portion (230), and a display order setting portion (242) for setting a display order of the analysis values to be displayed on the displaying portion (220) depending on the input operation received by the operation inputting portion (230).

FIG. 4

**EP 2 500 711 A2**

**Description**

BACKGROUND OF THE INVENTION

1. Field of the Invention

The present invention relates to an analyzing apparatus and more particularly to a gas analyzing apparatus including a displaying portion.

2. Description of the Related Art

Conventionally, there is developed an analyzing apparatus for analyzing a content of each of plural types of components contained in a sample gas to be a measuring target and displaying a result of the analysis of each component.
An example of the analyzing apparatus described above is disclosed in Japanese Laid-Open Patent Publication No. 7-318374. The analyzing apparatus disclosed in Japanese Laid-Open Patent Publication No. 7-318374 serves to analyze concentrations of CO, HC and $CO_2$ in a sample gas and to digitally display a result of the analysis on a liquid crystal screen.
When the analyzing apparatus described above is in use, it is supposed that a component to be visually recognized by a user is different depending on the needs of the user. For example, there may be a case in which a user tries to visually recognize the result of the analysis of CO, HC and $CO_2$, while the other user tries to visually recognize a result of the analysis of only the HC.
In the conventional analyzing apparatus, however, each component item is arranged and displayed in a predetermined order and size over a screen for displaying a result of an analysis. In other words, over the analysis result display screen, a result of an analysis of an unnecessary component for a user is also displayed. In some cases, accordingly, it is hard for the user to visually recognize a desirable analysis result. For example, there is a fear that a user might record an analysis value of the other component (for example, CO) by mistake when trying to make a memo while visually recognizing a desirable analysis result (for example, HC)

SUMMARY OF THE INVENTION

In consideration of the problem, it is an object of the present invention to provide an analyzing apparatus capable of displaying an analysis value related to a component item desired by a user so as to be easily recognized visually.
In order to attain the object, the present application employs the following structure. In other words, a first aspect of the invention is directed to an analyzing apparatus for analyzing a sample gas and displaying an analysis result in an image, including an analyzing portion for analyzing a sample gas and calculating analysis values related to items of the predetermined component, a displaying portion for displaying the analysis values in an image, an operation inputting portion for receiving an input operation by a user, and an analysis result display control portion for displaying the analysis values related to each of the items of the predetermined component on a screen of the displaying portion in a displaying mode depending on the input operation received by the operation inputting portion, and the analysis result display control portion includes a display number setting portion for setting a number of the analysis values to be displayed on an analysis result screen depending on the input operation received by the operation inputting portion, and a display order setting portion for setting a display order of the analysis values to be displayed on the displaying portion depending on the input operation received by the operation inputting portion.
In the first aspect of the invention, the items of the predetermined component may include, for example, a converted value calculated based on a measured concentration of the predetermined component, and an average value in a predetermined period for each analysis value.
A second aspect of the invention is directed to the analyzing apparatus according to the first aspect of invention, wherein the analysis result display control portion further includes a graph displaying portion for displaying, on the displaying portion, a graph representing a variation of the analysis values being displayed on the displaying portion together with the analysis values depending on the input operation received by the operation inputting portion.
A third aspect of the invention is directed to the analyzing apparatus according to the first or second invention, wherein the analyzing portion further includes an actual measuring portion for measuring concentrations of predetermined first and second components contained in the sample gas as an actual measured value of the predetermined first component and an actual measured value of the predetermined second component respectively, and a converting portion for calculating a converted value of the predetermined first component based on the actual measured value of the predetermined first component and the actual measured value of the predetermined second component which are obtained by the actual measuring portion, and the analysis values include at least the converted value of the predetermined first component, and the analysis values further include the actual measured value of the predetermined first component and/or the actual measured value of the predetermined second component.

In the third aspect of the invention, for example, the second component is oxygen, and the converting portion may calculate a converted value CON of the first component based on Equation (A), where the actual measured value of the first component which is measured by the actual measuring portion is represented by LAW, an oxygen concentration of clean air is represented by $O_2E$, an oxygen concentration of the sample gas which is predetermined by a specification of a device for discharging the sample gas is represented by $O_2D$, and an oxygen concentration in the sample gas which is measured by the actual measuring portion is represented by $O_2S$:

$$CON = (O_2E \cdot O_2D) / (O_2E \cdot O_2S) * LAW \quad \cdots (A).$$

In any one of the first to third aspects of the inventions, the analyzing apparatus is a portable analyzing apparatus and may include a calibration coefficient calculating portion for executing a calibration of the analyzing portion depending on the input operation received by the operation inputting portion, a coefficient storing portion for storing the calibration coefficient obtained by the calibration coefficient calculating portion, and a coefficient resetting portion for reading a calibration coefficient stored in the coefficient storing portion in the past depending on an inputting operation of a user, thereby resetting a current calibration coefficient.

A fourth aspect of the invention is directed to the analyzing apparatus according to any one of the first to third inventions, wherein the analysis result display control portion enlarges a font size of the analysis values displayed on the displaying portion when the number of the analysis values displayed is decreased.

In any one of the first to fourth aspects of the inventions, moreover, it is also possible to employ a structure further including a housing portion provided with the analyzing portion, the displaying portion, the operation inputting portion and the analysis result display control portion, and a strap portion to be used when a user carries the housing portion on his (her) back.

More specifically, it is also possible to employ a structure in which a housing portion includes an engagement portion to be coupled to a strap portion, the strap portion includes an engaging portion to be removably engaged with the engagement portion, and a band-shaped belt portion to come in contact with a body of a user, the strap portion is used when the user carries the housing on his (her) back, the engagement portion comprises a plurality of circular members, the housing portion is formed in a rectangular parallelepiped shape and has four circular members in total, that is, one on a front end of a left side surface, one on a front end of a right side surface, one on a rear end of the left side surface, and one on a rear end of the right side surface where a longitudinal direction is defined as a front-back direction. The engaging portion comprises a plurality of opening hooks which can be removably engaged with the circular members respectively. The strap portion includes a band-shaped coupling band portion having the opening hooks on both ends, and a pair of belt portions having ends fixed to a central part of the band-shaped coupling band portion, and the opening hooks are provided on the other ends of the pair of belt portions. It is more preferable to further include a band-shaped body belt having both ends fixed to the pair of belt portions and constructed to be dividable.

According to the first aspect of the invention, it is possible to display an analysis value related to a component desired by a user in an order desired by the user in a single screen so as to be easily and visually recognized.

According to the second aspect of the invention, the analysis result can be displayed in a graph. Consequently, a user can easily and visually recognize a variation of the analysis value over time for the component item which is displayed.

According to the third aspect of the invention, the actual measured value and the converted value can be displayed so as to be easily recognized visually in contrast with each other. Moreover, the converted value is calculated automatically. Therefore, the user can save the time and the labor needed for a manual calculation.

According to the fourth aspect of the invention, in the case in which the number of the analysis values to be recognized visually by a user is comparatively small, the component can be displayed to be visually recognized more easily.

BRIEF DESCRIPTION OF THE DRAWINGS

Fig. 1 is a view showing an outer appearance of an analyzing apparatus 1 according to a first embodiment of the present invention;
Fig. 2 is a block diagram showing a hardware structure of the analyzing apparatus 1 according to the first embodiment of the present invention;
Fig. 3 is a diagram showing a hardware structure of an analyzing unit 13 according to the first embodiment of the present invention;

Fig. 4 is a diagram showing a functional structure of the analyzing apparatus 1 according to the first embodiment of the present invention;

Fig. 5 is a flow chart showing an example of details of a processing to be executed by a control device 12 according to the first embodiment of the present invention;

Fig. 6 is a view showing an example of an analysis result screen image in a five-component display format according to the first embodiment of the present invention;

Fig. 7 is a view showing an example of an analysis result screen image in a three-component display format according to the first embodiment of the present invention;

Fig. 8 is a view showing an example of an analysis result screen image in a one-component display format according to the first embodiment of the present invention;

Fig. 9 is a flow chart showing an example of details of a display number switch processing to be executed by the control device 12 according to the first embodiment of the present invention;

Fig. 10 is a transition diagram showing a transition of a screen image to be displayed on a display 112 in the analyzing apparatus 1 according to the first embodiment of the present invention;

Fig. 11 is a flow chart showing an example of details of a menu screen processing to be executed by the control device 12 according to the first embodiment of the present invention;

Fig. 12 shows an example of a menu screen image according to the first embodiment of the present invention;

Fig. 13 is a flow chart showing an example of details of a component display order setting screen processing to be executed by the control device 12 according to the first embodiment of the present invention;

Fig. 14 shows an example of a component display order setting screen image according to the first embodiment of the present invention;

Fig. 15 is a view showing a state in which a component item button BK is selected according to the first embodiment of the present invention;

Fig. 16 is a view showing a state in which a display order of the component item buttons BK has been changed according to the first embodiment of the present invention;

Fig. 17 is a view showing a state in which the changed display order of Fig. 16 is reflected on the analysis result screen image;

Fig. 18 is a flow chart showing an example of details of a calibration screen processing executed by the control device 12 according to the first embodiment of the present invention;

Fig. 19 is a view showing an example of a calibration screen image according to the first embodiment of the present invention;

Fig. 20 is a diagram showing a subsequent part to the transition diagram illustrated in Fig.10, which illustrates the transition of the displayed screen image on the display 112 of the analyzing apparatus 1 according to the first embodiment of the present invention;

Fig. 21 is a view showing an example of a calibration mode setting screen image according to the first embodiment of the present invention;

Fig. 22 is a view showing an example of a span gas concentration dialog screen according to the first embodiment of the present invention;

Fig. 23 is a flow chart showing an example of details of a coefficient rollback screen processing executed by the control device 12 according to the first embodiment of the present invention;

Fig. 24 is a view showing an example of a coefficient rollback screen image according to the first embodiment of the present invention;

Fig. 25 is a view showing an example of a graph screen image according to the first embodiment of the present invention;

Fig. 26 is a perspective view showing an outer appearance of an analyzing apparatus according to a second embodiment of the present invention;

Fig. 27 is a view showing a structure of a strap 20 according to the second embodiment of the present invention; and

Fig. 28 is a view showing a state in which a user carries the analyzing apparatus using the strap 20 according to the second embodiment of the present invention.

## DETAILED DESCRIPTION OF THE PREFERRED EMBODIMENTS

(First Embodiment)

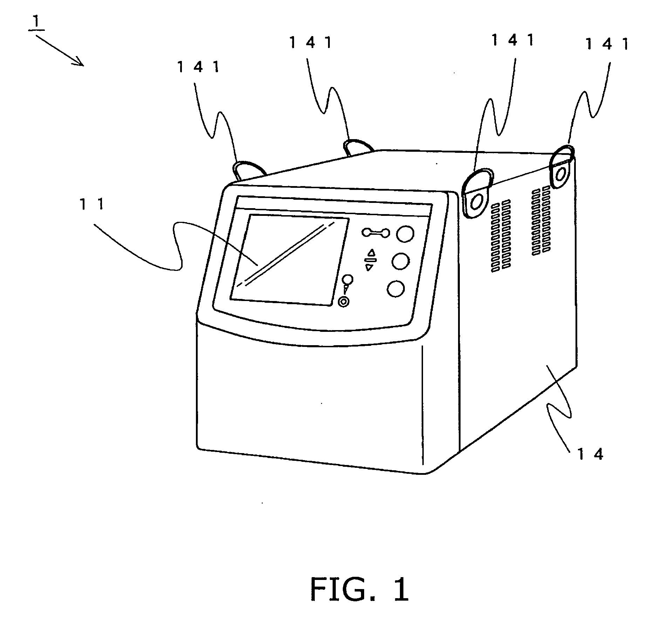

An analyzing apparatus 1 according to a first embodiment of the present invention will be described below. First of all, a structure of the analyzing apparatus 1 will be described. Fig. 1 is a view showing an outer appearance of the analyzing apparatus 1. As shown in Fig. 1, the analyzing apparatus 1 is a portable gas analyzing apparatus in which various hardware is disposed in a housing 14 having a shape of a substantially rectangular parallelepiped.

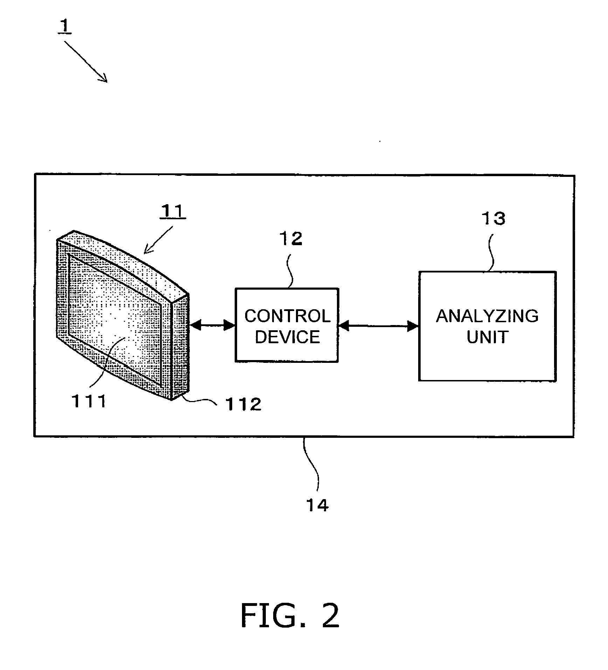

Fig. 2 is a block diagram showing a hardware structure of the analyzing apparatus 1. As shown in Fig. 2, the analyzing apparatus 1 includes a touch panel display 11, a control device 12 and an analyzing unit 13.

The touch panel display 11 includes a touch panel 111 and a display 112. The display 112 is a display device for displaying an image. The touch panel 111 is an input device which is provided on a screen of the display 112 and serves to receive an input operation (which will be hereinafter referred to as a touch input) through a user touching the screen. The user carries out the touch input to a display region of a button image displayed on the display 112 through the touch panel 111, thereby operating the analyzing apparatus 1. The touch panel display 11 is attached to a front surface of the housing 14 as shown in Fig. 1.

The control device 12 is a processing device including an information processing device such as a microcomputer, a storage device such as a memory, an interface circuit and the like. The control device 12 executes a program stored in the storage device and changes an image to be displayed on the display 112, setting of an operation of the analyzing unit 13 and the like, based on the input operation by the user received through the touch panel 111.

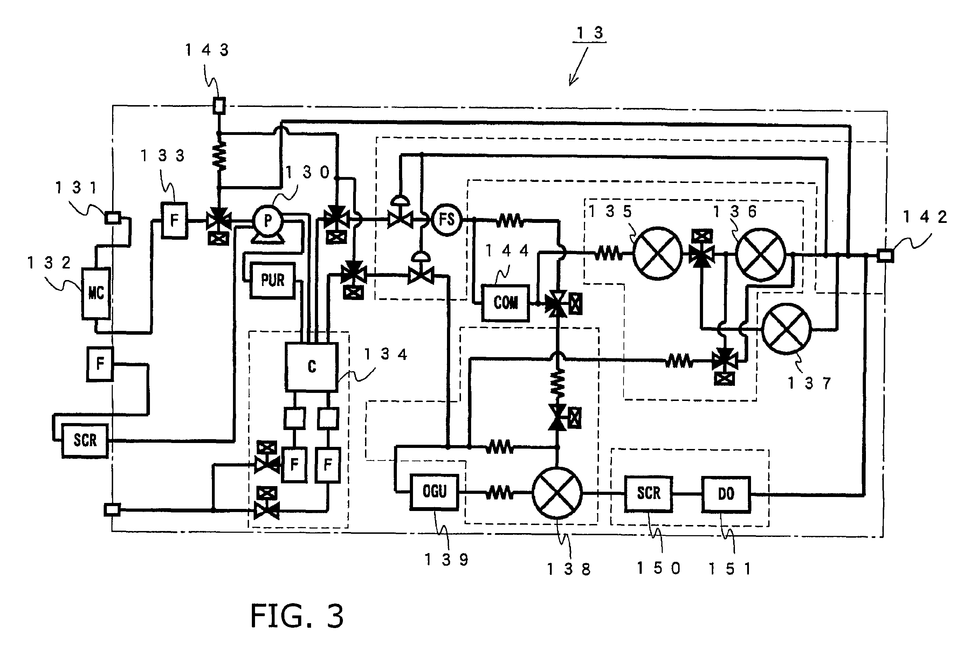

The analyzing unit 13 is a device for obtaining a sample gas to be an analyzing target and analyzing a component contained in the sample gas. A structure of the analyzing unit 13 will be described below in detail with reference to Fig. 3. Fig. 3 is a diagram showing a hardware structure of the analyzing unit 13.

As shown in Fig. 3, the analyzing unit 13 first drives a pump 130 to obtain a sample gas from a sample inlet 131. The sample gas thus obtained is subjected to a mist elimination processing in a mist catcher 132. The sample gas from which the mist has been eliminated is transmitted through a filter 133 for removing foreign substance and is then cooled to a predetermined temperature by an electronic cooler 134. The sample gas thus cooled is introduced into a $CO_2$ analyzer 135, a $CO-SO_2$ analyzer 136, an $O_2$ analyzer 137 and an $NO_X$ analyzer 138.

The $CO_2$ analyzer 135 serves to measure a $CO_2$ concentration in the sample gas by using an infrared absorbing method. The $CO-SO_2$ analyzer 136 serves to measure concentrations of CO and $SO_2$ in the sample gas by using the infrared absorbing method. The $O_2$ analyzer 137 serves to measure an $O_2$ concentration in the sample gas by using a zirconia method. The $NO_X$ analyzer 138 serves to measure an $NO_X$ concentration in the sample gas by a chemiluminescent method, by utilizing ozone generated by an ozone generator 139. In the sample gas to be introduced into the $NO_X$ analyzer 138, $NO_2$ is pre-converted into NO by a converter 144. The sample gas which has been measured by each analyzing unit is subjected to an after-treatment by a scrubber 150, an ozonolytic unit 151 or the like and is then discharged through a discharging port 142.

When carrying out a calibration for a sensor provided in each of the $CO_2$ analyzer 135, the $CO-SO_2$ analyzer 136, the $O_2$ analyzer 137 and the $NO_X$ analyzer 138 in the analyzing unit 13, span gases corresponding to respective components to be measured by each analyzer are introduced from a span gas inlet 143 and the calibration is performed based on a calibration coefficient set in a processing of the control device 12 which will be described below. Each span gas contains a predetermined component of a certain known concentration.

With the structure described above, the analyzing unit 13 measures concentrations of $CO_2$, CO, $SO_2$, $O_2$ and $NO_X$ in the sample gas. An internal structure of the analyzing unit 13 described above is only illustrative. As long as plural types of components in the sample gas can be analyzed, the analyzing unit 13 may comprise any arbitrary conventionally well-known device. Moreover, the analyzing unit 13 may measure a concentration of each component on a weight basis or a volume basis.

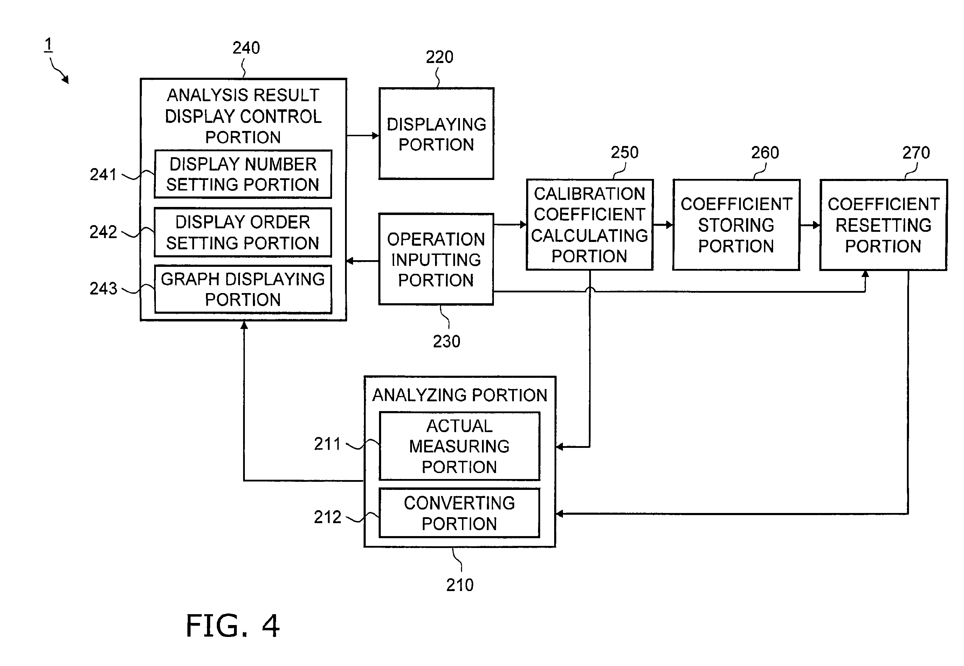

Next, a functional structure of the analyzing apparatus 1 will be described with reference to Fig. 4. Fig. 4 is a diagram showing a functional structure of the analyzing apparatus 1. The analyzing apparatus 1 functionally includes an analyzing portion 210, a displaying portion 220, an operating input portion 230, an analysis result display control portion 240, a calibration coefficient calculating portion 250, a coefficient storing portion 260, and a coefficient resetting portion 270. The analyzing portion 210 includes an actual measuring portion 211 and a converting portion 212. The analysis result display control portion 240 includes a display number setting portion 241, a display order setting portion 242, and a graph displaying portion 243. The touch panel display 11, the control device 12 and the analyzing unit 13 cooperate to realize functions of the analyzing portion 210, the displaying portion 220, the operation inputting portion 230, the calibration coefficient calculating portion 250, the coefficient storing portion 260, the coefficient resetting portion 270, the actual measuring portion 211, the converting portion 212, the display number setting portion 241, the display order setting portion 242 and the graph displaying portion 243.

The analyzing portion 210 is a functional portion for analyzing the sample gas and calculating an analysis value related to a plurality of components, and is mainly implemented with the analyzing unit 13 and the control device 12. The actual measuring portion 211 is a functional portion for measuring, as an actual measured value, a concentration of a predetermined component in the sample gas. The converting portion 212 is a functional portion for calculating a converted value based on the actual measured value. The displaying portion 220 is a functional portion for displaying an analysis result obtained by the analyzing portion 210 and is mainly implemented with the display 112. The operation inputting portion 230 is a functional portion for receiving an input operation from a user and is mainly implemented with the touch panel 111. The analysis result display control portion 240 is a functional portion for changing a display mode of the analysis value to be displayed on the displaying portion 220 depending on the input operation by the user. The display number setting portion 241 is a functional portion for changing the number of analysis values to be displayed on the displaying portion 220 depending on the input operation by the user. The display order setting portion 242 is a functional portion for changing the order of analysis values to be displayed on the displaying portion 220 depending on the input operation by the user. The graph displaying portion 243 is a functional portion for displaying, on the displaying portion 220, a graph showing a variation, over time, of an analysis value being displayed on the displaying portion 220 along with the analysis value itself, in response to the input operation to the operating inputting portion 230. The calibration coefficient calculating portion 250 is a functional portion for calibrating the analyzing unit 13 and calculating a calibration coefficient of the analyzing unit 13. The coefficient storing portion 260 is a functional portion for storing the calibration coefficient which is set. The coefficient resetting portion 270 is a functional portion for resetting the calibration coefficient to a past set value which is stored, in response to the input operation by the user.

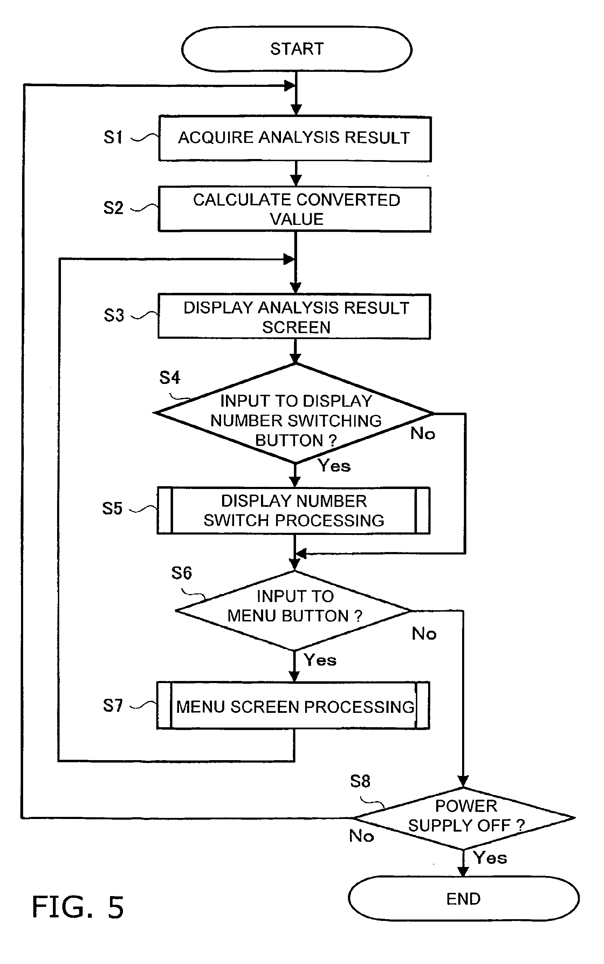

Next, a processing to be executed by the control device 12 will be described with reference to Fig. 5. Fig. 5 is a flow chart showing an example of details of the processing to be executed by the control device 12 according to the first embodiment of the present invention. The control device 12 starts the processing of the flow chart shown in Fig. 5 in the case when a power supply (not shown) of the analyzing apparatus 1 is set to an ON state. The control device 12 first executes a processing of Step S1 when the processing of the flow chart shown in Fig. 5 is started.

At the Step S1, the control device 12 acquires an analysis result. More specifically, the control device 12 controls the analyzing unit 13 and acquires, as actual measured values, concentrations of the respective components detected in the $CO_2$ analyzer 135, a $CO$-$SO_2$ analyzer 136, the $O_2$ analyzer 137 and the $NO_X$ analyzer 138. The function of the actual measuring portion 211 is implemented based on the processing related to the Step S1 and the operation of the analyzing unit 13. When the processing of the Step S1 is completed, the control device 12 causes the processing to proceed to Step S2.

At the Step S2, the control device 12 calculates a converted value of each component. More specifically, the control device 12 corrects the concentrations of the respective components acquired at the Step S1 based on a current oxygen concentration acquired at the Step S1. In more detail, the control device 12 calculates a converted value CON based on Equation (1) where a concentration of a target component of which converted value is to be calculated is represented by LAW, an oxygen concentration of clean air is represented by $O_2E$, an oxygen concentration of a sample gas which is predetermined by the specification of a device for discharging the sample gas is represented by $O_2D$, and an oxygen concentration in the sample gas which is measured at the Step S1 is represented by $O_2S$.

$$CON = (O_2E \cdot O_2D) / (O_2E \cdot O_2S) \ X \ LAW \qquad \cdots (1)$$

The oxygen concentration $O_2E$ of the clean air is a value which is preset to 21 (vol%), for example. Moreover, the oxygen concentration $O_2D$ based on the specification of the sample gas is a constant value which is predetermined for each device for discharging the sample gas (for example, boiler facilities or the like). If the measured oxygen concentration $O_2S$ in the sample gas is higher than the oxygen concentration $O_2E$ in the air, the control device 12 serves to replace a value obtained by subtracting $O_2S$ from $O_2E$ (a denominator in the Equation 1) with a constant (e.g. 1) and to calculate the converted value. When the processing of the Step S2 is completed, the control device 12 causes the processing to proceed to Step S3.

The function of the converting portion 212 is implemented based on the processing related to the Step S2 of the control device 12. With such a function, the converted value is automatically calculated. Therefore, the user can save the time and the labor needed for manually calculating the converted value. For example, referring to an exhaust gas of the boiler facilities or the like, regulations based on the converted value are imposed by law in some cases. According to the analyzing apparatus 1 in accordance with the preset invention, the converted value can be automatically calculated and displayed as described above. Therefore, the user can immediately determine whether a reference value of the regulations for the converted value is attained or not. The method of calculating the converted value is only illustrative. The control device 12 may sets, as the converted value, a value obtained by executing any calculation based on an actual measured value in addition to the calculating method described above.

Although the description has been given to the example in which the control device 12 calculates a so-called dilute concentration as the converted value, thereby carrying out the processing at the Step S2, the control device 12 may carry out an arbitrary calculation based on an actual measured value, thereby calculating an arbitrary converted value. For example, the control device 12 may calculate, as the converted value, a value obtained by converting an actual measured value measured on a weight basis into that measured on a volume basis. Similarly, the control device 12 may calculate, as the converted value, a value obtained by converting an actual measured value measured on the volume basis into that measured on the weight basis.

At the Step S3, the control device 12 displays an analysis result screen image on the display 112. The analysis result display screen image shows, as analysis values, the $NO_X$ concentration, the $SO_2$ concentration, the CO concentration, the $CO_2$ concentration and the $O_2$ concentration which are acquired at the Step S1, and the $NO_X$ converted value and the $SO_2$ converted value which are calculated at the Step S2. Hereinafter, the $NO_X$ concentration, the $SO_2$ concentration, the CO concentration, the $CO_2$ concentration, the $O_2$ concentration, the $NO_X$ converted value and the $SO_2$ converted value, which are analyzing targets, will be referred to as component items. The control device 12 displays the analysis value related to each of the component items in the analysis result display screen image in a preset display order. When the processing of the Step S3 is completed, the control device 12 causes the processing to proceed to Step S4.

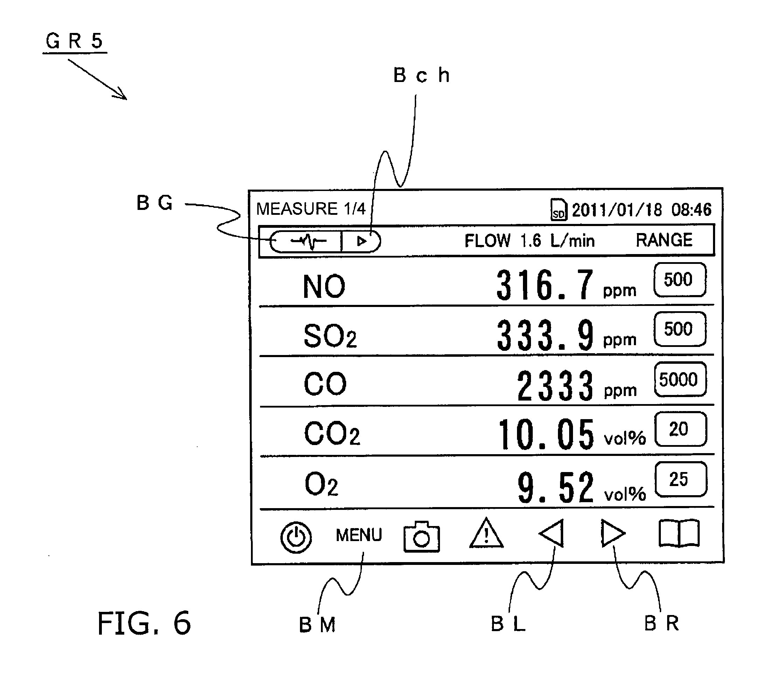

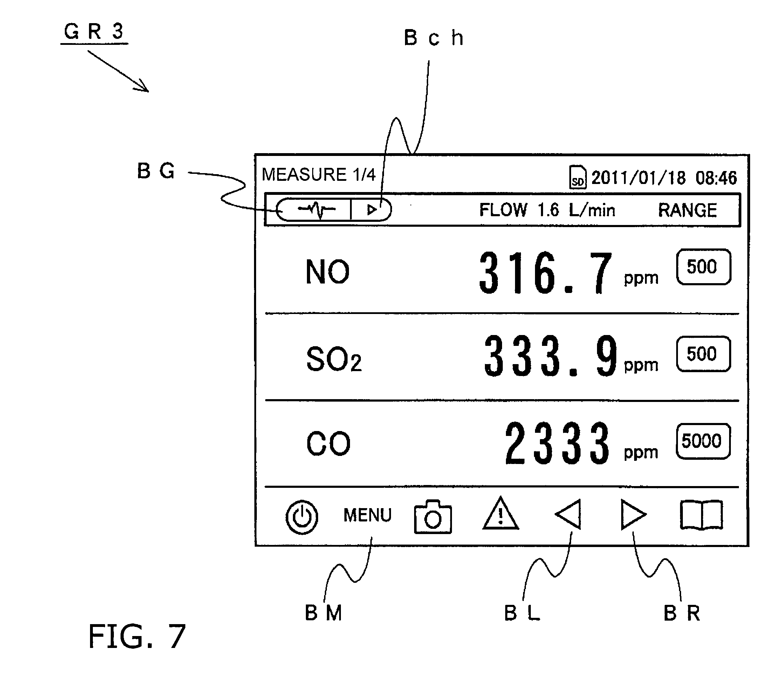

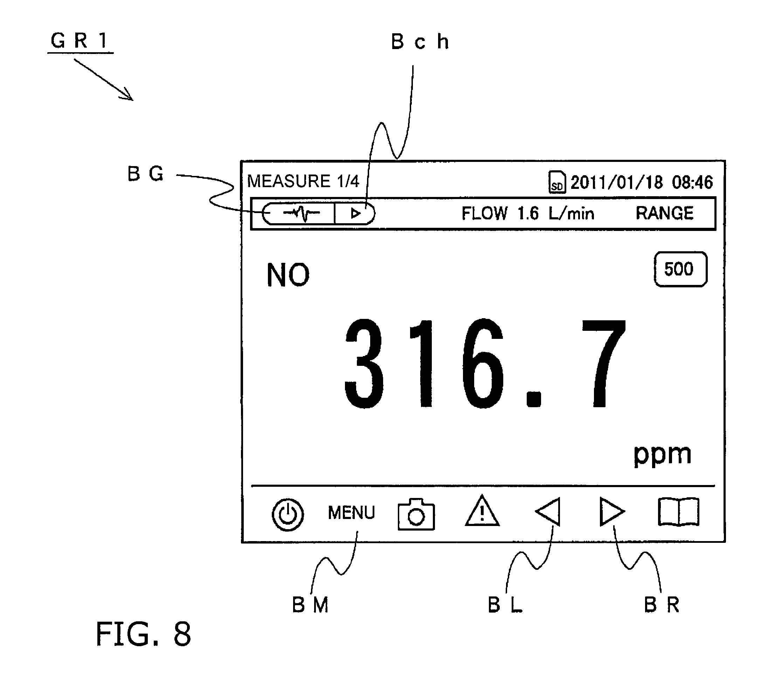

Each of Figs. 6 to 8 shows an example of the analysis result screen image. Fig. 6 is a view showing an example of an analysis result screen image GR5 in a five-component display format. Fig. 7 is a view showing an example of an analysis result screen image GR3 in a three-component display format. Fig. 8 is a view showing an example of an analysis result screen image GR1 in a one-component display format. The control device 12 displays analysis values of five component items in the five-component display format. The control device 12 displays analysis values of three component items in the three-component display format in a larger font than in the five-component display format. The control device 12 displays an analysis value of one component item in the one-component display format in a larger font than in the three-component display format. Thus, a plurality of display formats having different numbers of analysis values to be displayed and different display sizes of the respective analysis values can be used in the analysis result screen image. These display formats can be arbitrarily switched by the user through the processing of the Step S4 and Step S5 which will be described below.

Although the description has been given to the example in which a font size of characters representing the analysis value related to the component item is enlarged if the number of analysis values to be displayed is decreased in the embodiment, the control device 12 may enlarge the font size of characters representing an item name and the font size of characters representing the unit of an analysis value as well as the analysis value depending on the number of displayed items in the same manner.

At the Step S4, the control device 12 determines whether a display number switching button Bch is subjected to a touch input operation from the user or not. The display number switching button Bch serves to change the number of the analysis values to be displayed in the analysis result screen image. The control device 12 detects, through the touch panel 111, the presence of a touch input in a region in which an image representing the display number switching button Bch is displayed. If it is determined that the input operation to the display number switching button Bch is performed, the control device 12 causes the processing to proceed to the Step S5. On the other hand, if it is determined that the input operation of the display number switching button Bch is not performed, the control device 12 causes the processing to proceed to Step S6.

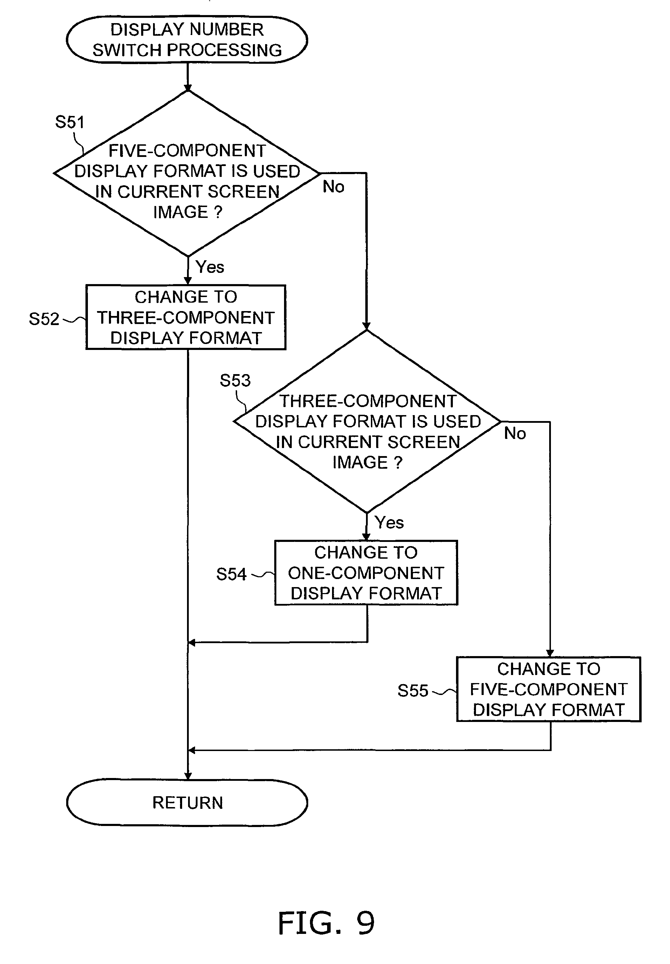

At the Step S5, the control device 12 executes a display number switch processing. The display number switch processing serves to change a display format having a different display item number in the analysis result screen image. The display number switch processing will be described below with reference to Fig. 9. Fig. 9 is a flow chart showing an example of details of the display number switch processing to be executed by the control device 12 according to the first embodiment of the present invention. When the display number switch processing is started, the control device 12 first executes a processing of Step S51.

At the Step S51, the control device 12 determines whether or not the five-component display format is used in a current display screen image. If it is determined that the five-component display format is used in the current display screen image, the control device 12 causes the processing to proceed to Step S52. On the other hand, if it is determined that the five-component display format is not used in the current display screen image, the control device 12 causes the processing to proceed to Step S53.

At the Step S52, the control device 12 changes the display screen image into the analysis result display screen image GR3 in the three-component display format (see Fig. 7). When the processing of the Step S52 is completed, the control device 12 causes the processing to proceed to the Step S6 in Fig. 5.

At the Step S53, the control device 12 determines whether or not the three-component display format is used in the current display screen image. If it is determined that the three-component display format is used in the current display screen image, the control device 12 causes the processing to proceed to Step S54. On the other hand, if it is determined that the three-component display format is not used in the current display screen image, the control device 12 causes the processing to proceed to Step S55.

At the Step S54, the control device 12 changes the display screen image into the analysis result display screen image GR1 in the one-component display format (see Fig. 8). When the processing of the Step S54 is completed, the control device 12 causes the processing to proceed to the Step S6 in Fig. 5.

At the Step S55, the control device 12 changes the display screen image into the analysis result display screen image GR5 in the five-component display format (see Fig. 6). When the processing of the Step S55 is completed, the control device 12 causes the processing to proceed to the Step S6 in Fig. 5.

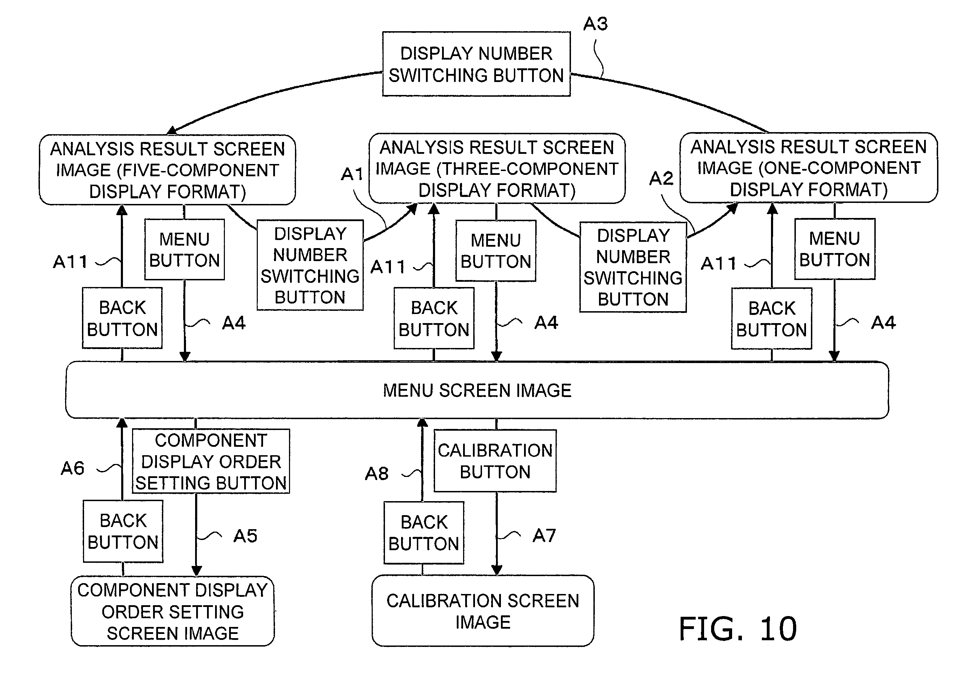

According to the display number switch processing, as shown in Fig. 10, every time the display number switching button Bch is subjected to the touch input, the display format of the analysis result display screen image is switched. Fig. 10 is a transition diagram showing a transition of the screen image to be displayed on the display 112 of the analyzing apparatus 1 according to the first embodiment of the present invention. When the display number switching button Bch is touched while the current display screen image is the analysis result screen image GR5 in the five-component display format, the analysis result screen image GR3 in the three-component display format is displayed (an arrow A1 in Fig. 10). When the display number switching button Bch is touched while the current display screen image is the analysis result screen image GR3 in the three-component display format, the analysis result screen image GR1 in the one-component display format is displayed (an arrow A2 in Fig. 10). When the display number switching button Bch is touched while the current display screen image is the analysis result screen image GR1 in the one-component display format, the analysis result screen image GR5 in the five-component display format is displayed (an arrow A3 in Fig. 10). Thus, the function of the display number setting portion 241 is implemented based on the display number switch processing executed by the control device 12 and the touch display panel 11.

Although the description has been given to the example in which the number of component items to be displayed on the analysis result display screen image is switched between one, three, and five in the embodiment, the processing is only illustrative and the number of component items to be displayed in each display format may be arbitrarily changed as long as the number of component items to be displayed on the analysis result display screen image can be varied. For example, in the case in which the display number switching button Bch is subjected to the touch input when the analysis result display screen image in the one-component display format is displayed, the screen image may be switched into that in the two-component display format (not shown) for displaying two component items.

Returning to the description of Fig. 5, at the Step S6, the control device 12 determines whether a menu button BM displayed in the bottom portion of the analysis result screen image is subjected to a touch input or not. If it is determined that the menu button BM is subjected to the touch input, the control device 12 causes the processing to proceed to Step S7 in which a menu screen image GM is displayed (an arrow A4 in Fig. 10). On the other hand, if it is determined that the menu button BM is not subjected to the touch input, the control device 12 causes the processing to proceed to Step S8.

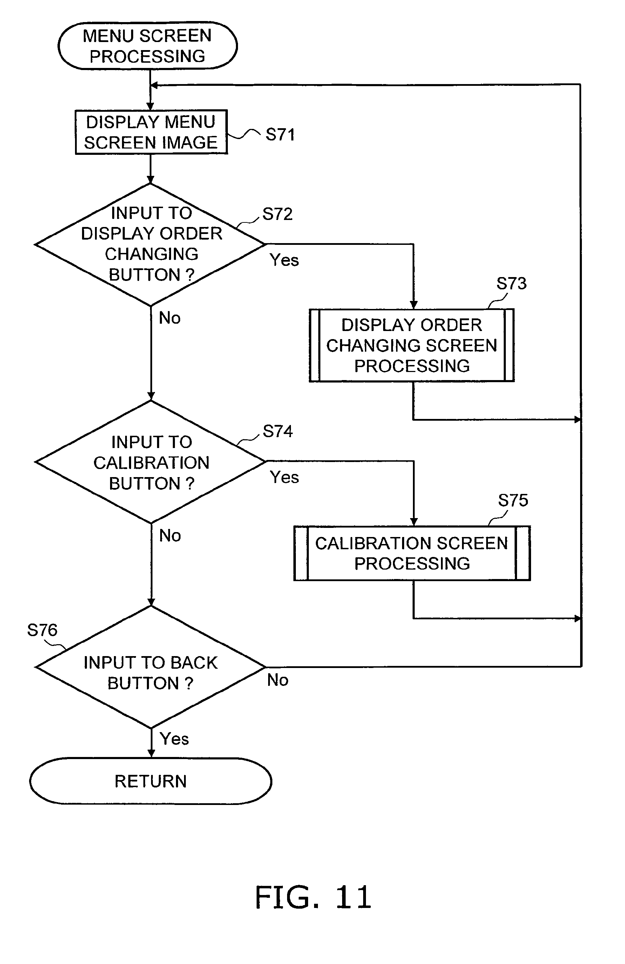

At the Step S7, the control device 12 executes a menu screen processing. The menu screen processing serves to call various screen images, depending on operations by the user, for changing the setting of the analyzing apparatus 1. The menu screen processing will be described below with reference to Fig. 11. Fig. 11 is a flow chart showing an example of details of the menu screen processing to be executed by the control device 12 according to the first embodiment of the present invention. When the menu screen processing is started, the control device 12 first executes a processing of Step S71.

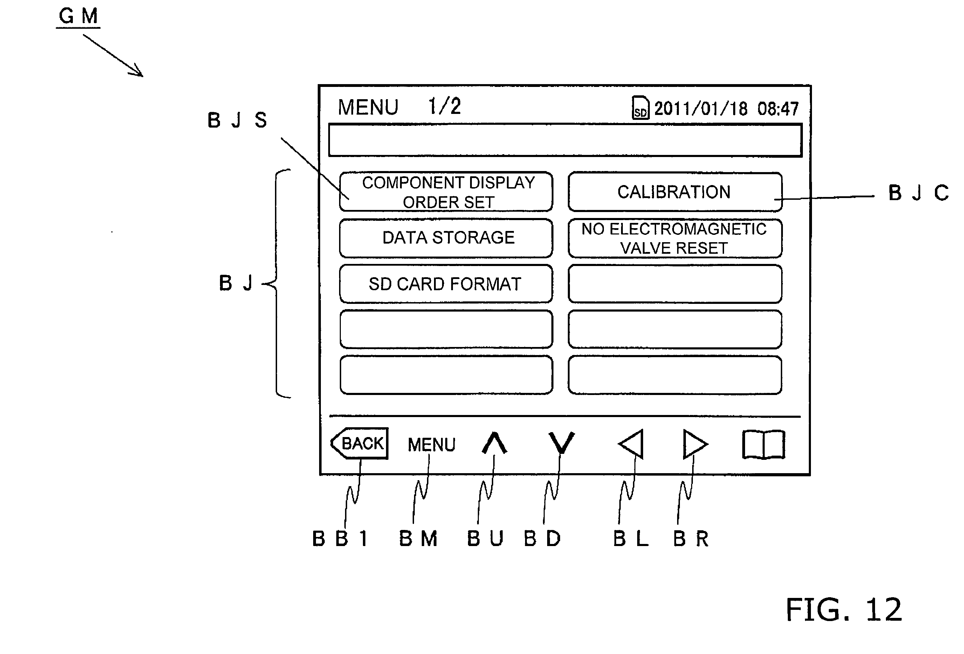

At the Step S71, the control device 12 displays the menu screen image GM. Fig. 12 shows an example of the menu screen image GM according to the first embodiment of the present invention. As shown in Fig. 12, the control device 12 displays a plurality of menu item buttons BJ on the menu screen image GM. When detecting the touch input to any of the menu item buttons BJ, the control device 12 calls an operation screen image corresponding to the button. The menu item buttons BJ include a component display order setting button BJS and a calibrating button BJC. When the processing of the Step S71 is completed, the control device 12 causes the processing to proceed to Step S72.

At the Step S72, the control device 12 determines whether the component display order setting button BJS is subjected to a touch input or not. If it is determined that the component display order setting button BJS is subjected to the touch input, the control device 12 causes the processing to proceed to Step S73 in which a component display order setting screen image GJ is displayed (an arrow A5 in Fig. 10). On the other hand, if it is determined that the component display order setting button BJS is not subjected to the touch input, the control device 12 causes the processing to proceed to Step S74.

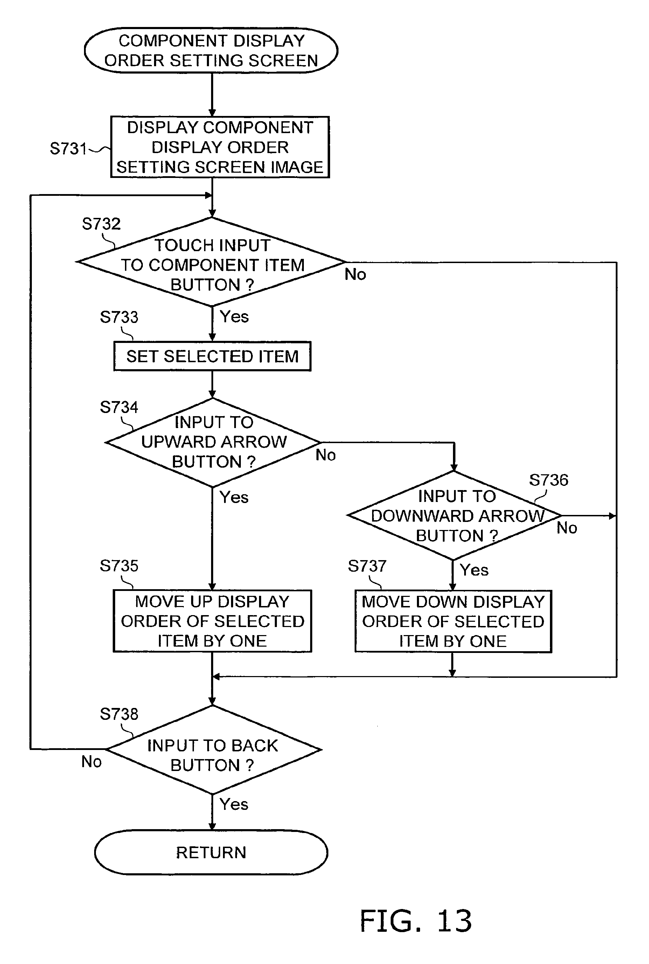

At the Step S73, the control device 12 executes a component display order setting screen processing. The component display order setting screen processing serves to receive an operation for changing a display order of the analysis values related to the respective component items to be displayed in the analysis result display screen image. The component display order setting screen processing will be described below with reference to Fig. 13. Fig. 13 is a flow chart showing an example of details of the component display order setting screen processing executed by the control device 12 according to the first embodiment of the present invention. When the component display order setting screen processing is started, the control device 12 first executes a processing of Step S731.

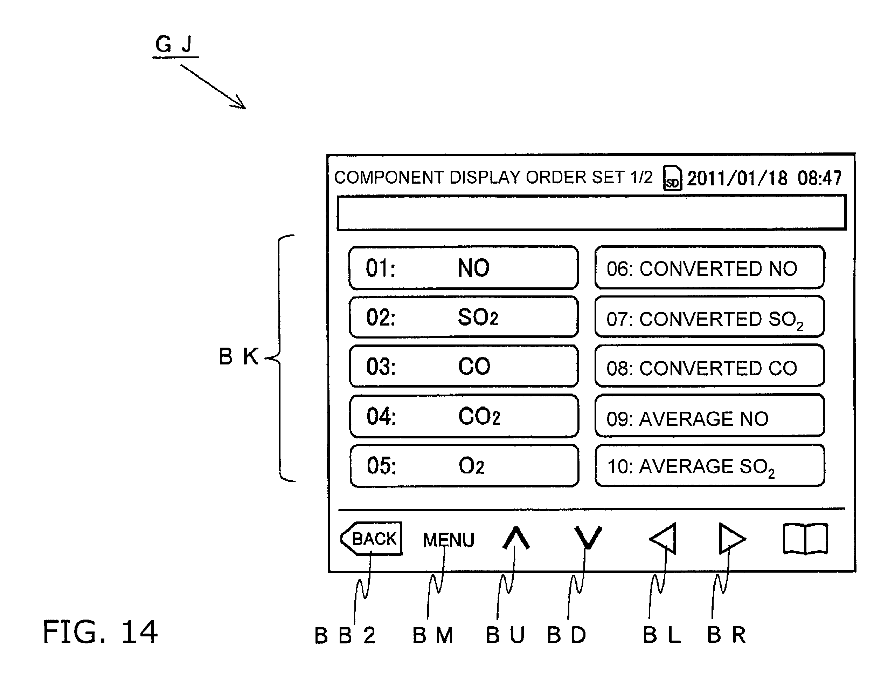

At the Step S731, the control device 12 displays the component display order setting screen image GJ. Fig. 14 shows an example of the component display order setting screen image GJ according to the first embodiment of the present invention. As shown in Fig. 14, the control device 12 displays a plurality of component item buttons BK in the component display order setting screen image. The component item buttons BK correspond to the respective component items acquired or calculated at the Steps S1 and S2. Moreover, the control device 12 displays an upward arrow button BU and a downward arrow button BD for changing the position of the component item buttons BK in the component display order setting screen image. When the processing of the Step S731 is completed, the control device 12 causes the processing to proceed to Step S732.

At the Step S732, the control device 12 determines whether a component item button BK is subjected to a touch input or not. If it is determined that the component item button BK is subjected to the touch input, the control device 12 causes the processing to proceed to Step S733. On the other hand, if it is determined that the component item button BK is not subjected to the touch input, the control device 12 causes the processing to proceed to Step S738.

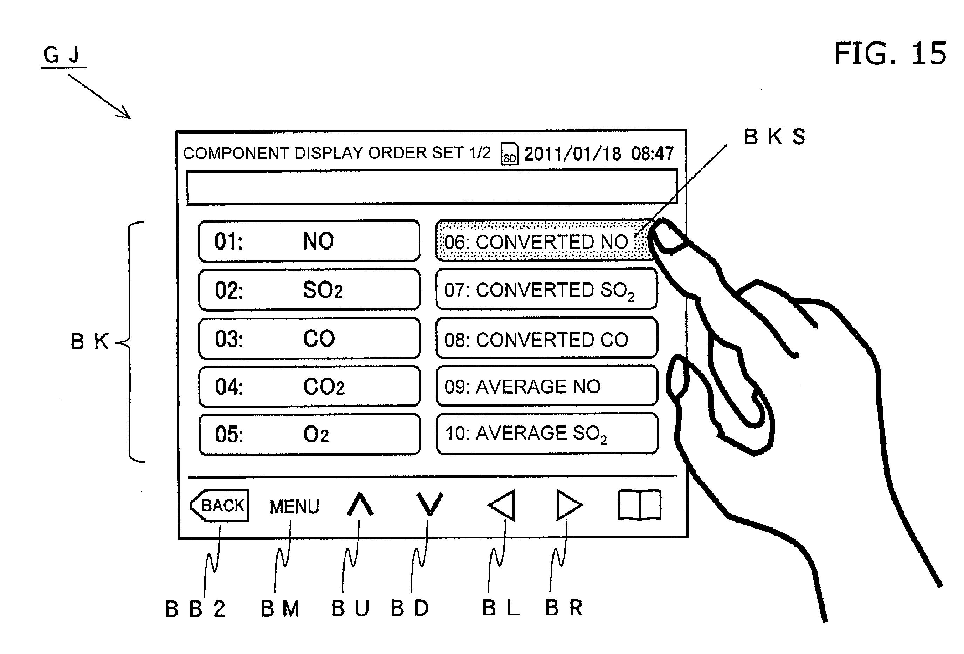

At the Step S733, the control device 12 sets, as a selected item button BKS, the component item button BK receiving the touch input at the Step S732. The control device 12 displays the selected item button BKS in a different color from the other component item buttons BK. Fig. 15 is a view showing a state in which a component item button BK is selected. Fig. 15 shows an example in which the component item button BK corresponding to converted NO is set to be the selected item button BKS. When the processing of the Step S733 is completed, the control device 12 causes the processing to proceed to Step S734.

At the Step S734, the control device 12 determines whether the upward arrow button BU is subjected to a touch input or not. If it is determined that the upward arrow button BU is subjected to the touch input, the control device 12 causes the processing to proceed to Step S735. On the other hand, if it is determined that the upward arrow button BU is not subjected to the touch input, the control device 12 causes the processing to proceed to Step S736.

At the Step S735, the control device 12 moves up the display order of the selected item button BKS by one. When the processing of the Step S735 is completed, the control device 12 causes the processing to proceed to Step S738.

At the Step S736, the control device 12 determines whether the downward arrow button BD is subjected to a touch input or not. If it is determined that the downward arrow button BD is subjected to the touch input, the control device 12 causes the processing to proceed to Step S737. On the other hand, if it is determined that the downward arrow button BD is not subjected to the touch input, the control device 12 causes the processing to proceed to Step S738.

At the Step S737, the control device 12 moves down the display order of the selected item button BKS by one. When the processing of the Step S737 is completed, the control device 12 causes the processing to proceed to Step S738.

At the Step S738, the control device 12 determines whether a BACK button BB2 is subjected to a touch input or not. If it is determined that the BACK button BB2 is subjected to the touch input, the control device 12 stores the set display order of the component items in a storage device of itself, and returns the processing to the Step S71 in Fig. 11 in which the menu screen image GM (see Fig. 12) is displayed (an arrow A6 in Fig. 10). On the other hand, if it is determined that the BACK button BB2 is not subjected to the touch input, the control device 12 returns the processing to the Step S732.

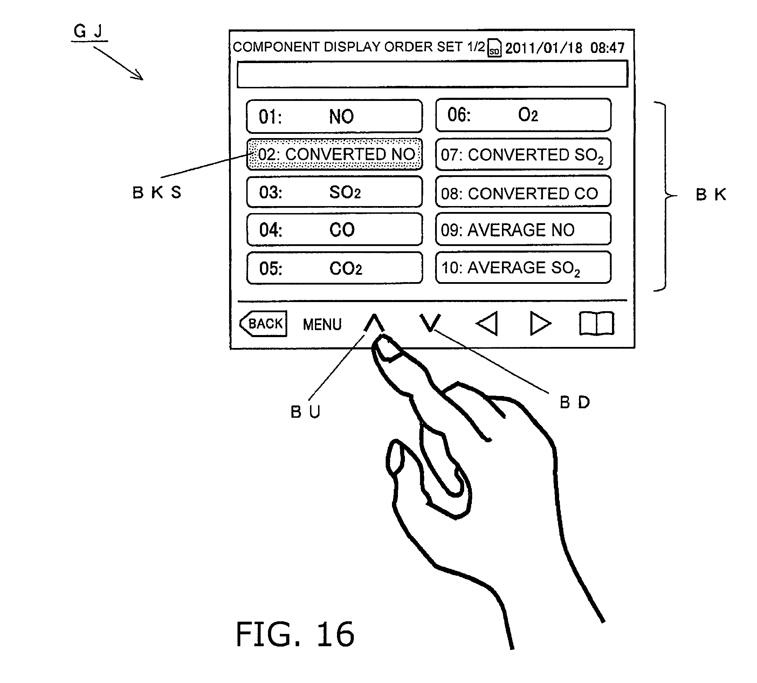

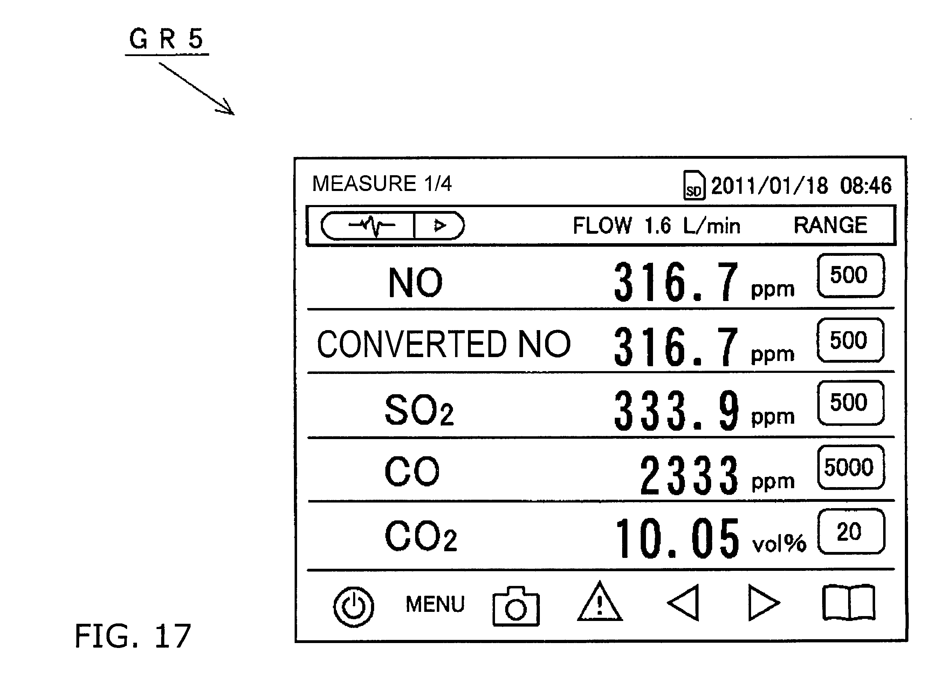

Fig. 16 is a view showing a state in which the display order of the component item buttons BK has been changed. Fig. 16 shows an example in which the display order of the selected item button BKS corresponding to the converted NO selected in Fig. 15 has been moved up through repetitive executions of the processing from the Step S734 to Step S735. When the user sets the display order of the component items as shown in Fig. 16 and then touches the BACK button repetitively (the Step S738 and Step S76 which will be described below) to return the screen image to the analysis result screen image (the Step S3), the analysis values related to the respective component items are displayed in the changed display order of Fig. 16, as shown in Fig. 17. Fig. 17 is a view showing a state in which the changed display order of Fig. 16 is reflected in the analysis result screen image.

The function of the display order setting portion 242 is implemented based on the component display order setting screen processing executed by the control device 12 and the touch panel display 11. In the analyzing apparatus 1 according to the present invention, thus, the user can arbitrarily set the display number and display order of the analysis values related to the respective component items. Accordingly, the component item desired by the user can be displayed to be easily recognized visually in an order desired by the user. Moreover, the component items include an actual measured value and a converted value for each component. Therefore, it is possible to display the actual measured value of $NO_X$ and the converted value of $NO_X$ in parallel, for example. In other words, in the analyzing apparatus 1 according to the present invention, it is possible to display the actual measured value and the converted value so as to be visually recognized in contrast with each other.

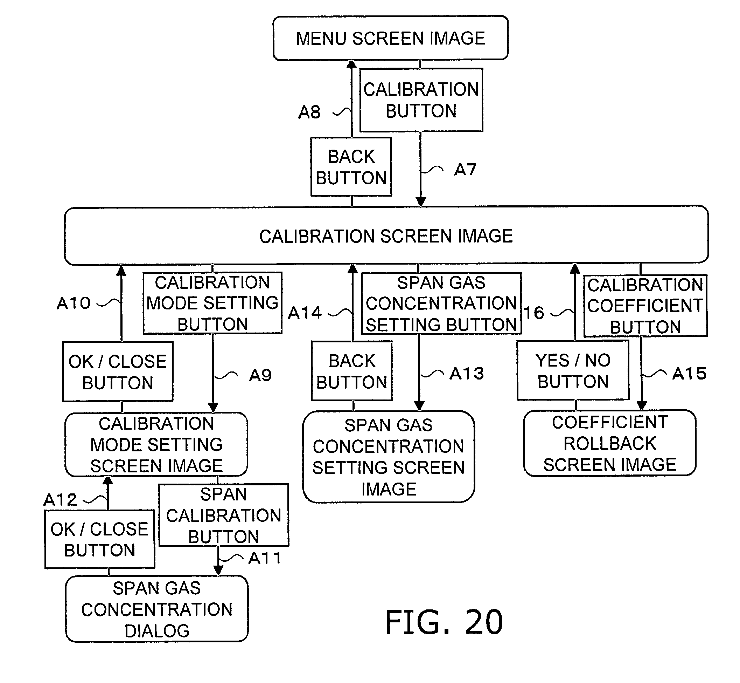

At the Step S74, the control device 12 determines whether the calibration button BJC is subjected to a touch input or not. If it is determined that the calibration button BJC is subjected to the touch input, the control device 12 causes the processing to proceed to Step S75 in which the calibration screen GK is displayed (an arrow A7 in Figs. 10 and 20). On the other hand, if it is determined that the calibration button BJC is not subjected to the touch input, the control device 12 causes the processing to proceed to Step S76.

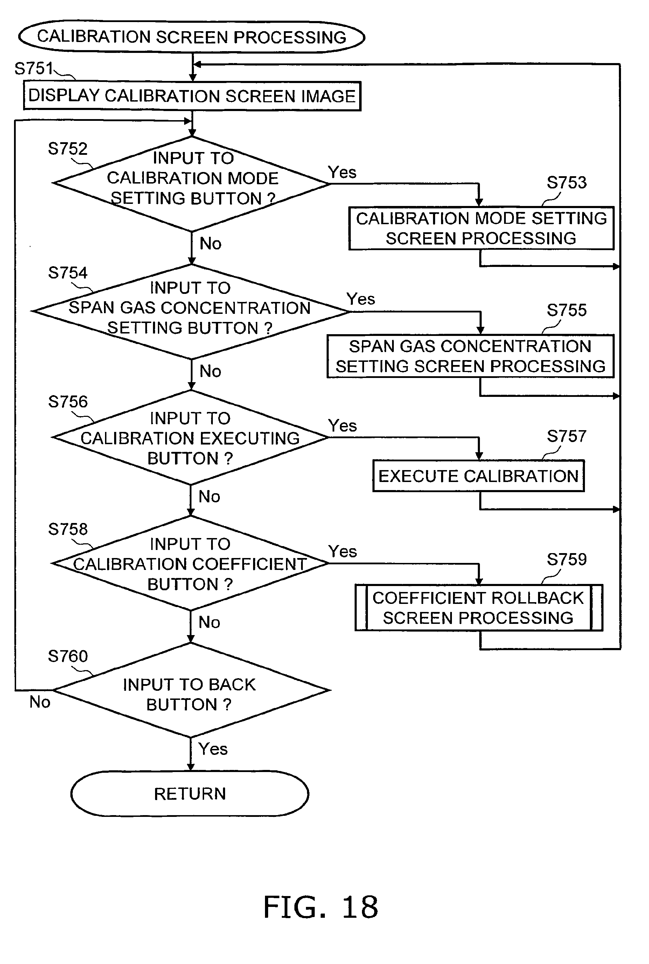

At the Step S75, the control device 12 executes a calibration screen processing. The calibration screen processing serves to receive an operation for executing the calibration of the analyzing apparatus 1 and changing the setting of the calibration. In the analyzing apparatus 1 according to the present invention, the user can arbitrarily select and execute a zero calibration or a span calibration for each component that is to be a measuring target. The calibration screen processing will be described below with reference to Fig. 18. Fig. 18 is a flow chart showing an example of details of the calibration screen processing executed by the control device 12 according to the first embodiment of the present invention. When the calibration screen processing is started, the control device 12 first executes a processing of Step S751.

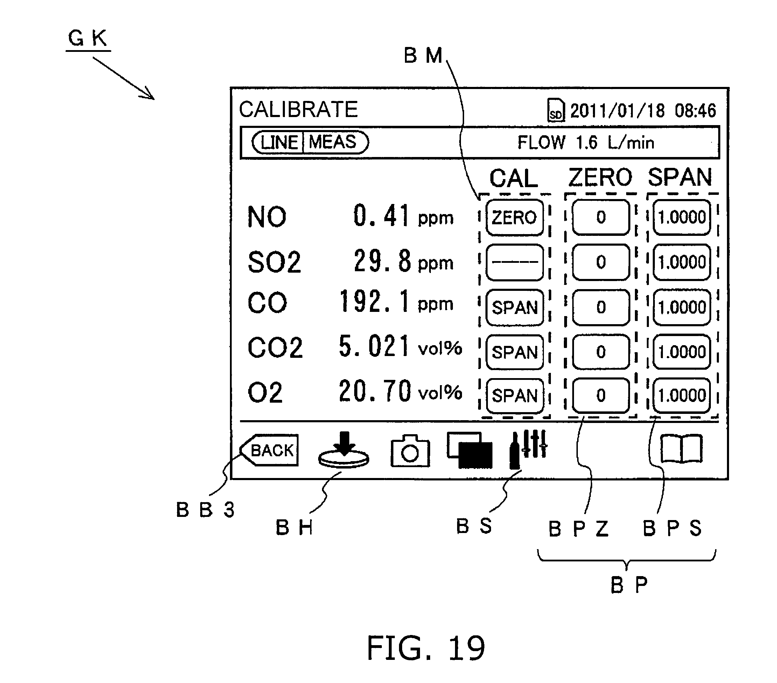

At the Step S751, the control device 12 displays the calibration screen image GK. Fig. 19 is a view showing an example of the calibration screen image GK. The control device 12 displays calibration coefficient buttons BP, a span concentration setting button BS, a calibration executing button BH, a calibration mode setting button BM and a BACK button BB3 in the calibration screen image GK. The calibration coefficient buttons BP serve to reset calibration coefficients. The calibration coefficient buttons BP have two types of buttons, namely, a zero calibration coefficient button BPZ and a span calibration coefficient button BPS. The control device 12 assigns a zero calibration coefficient button BPZ, a span calibration coefficient button BPS and a calibration mode setting button BM for each of components ($CO_2$, CO, $SO_2$, $O_2$ and $NO_X$) measured by the analyzing units 13, so as to correspond to each of the components, and lists them in the calibration screen image GK.

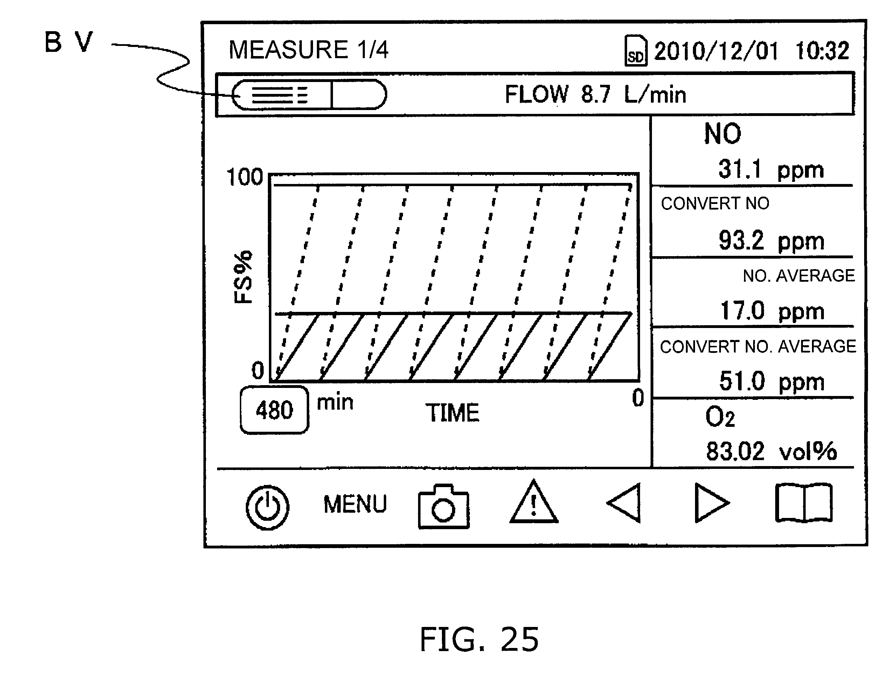

The zero calibration coefficient button BPZ serves to reset a zero calibration coefficient calculated when the zero calibration for the analyzing apparatus 1 is executed. The control device 12 displays a current zero calibration coefficient for a corresponding component in the display region of the zero calibration coefficient button BPZ. The span calibration coefficient button BPS serves to reset a span calibration coefficient calculated when the span calibration for the analyzer for measuring the corresponding component is executed. The control device 12 displays a current span calibration coefficient of a corresponding component in the display region of the span calibration coefficient button BPS. The span concentration setting button BS serves to display an operation screen image (the span gas concentration setting screen image GKS: see Fig. 25) for inputting a concentration of a span gas to be used in the calibration. The calibration executing button BH serves to start the calibration of the analyzing apparatus 1. The calibration mode setting button BM serves to select whether the calibration for a corresponding component is to be executed or not, and to select the type of calibration to be executed. When the processing of the Step S751 is completed, the control device 12 causes the processing to proceed to Step S752.

At the Step S752, the control device 12 determines whether the calibration mode setting button BM is subjected to a touch input or not. If it is determined that the calibration mode setting button BM is subjected to the touch input, the control device 12 causes the processing to proceed to Step S753 in which the calibration mode setting screen image GKM is displayed (an arrow A9 in Fig. 20). Fig. 20 is a diagram showing a subsequent part to the transition diagram illustrated in Fig. 10, which illustrates the transition of the displayed screen image on the display 112 of the analyzing apparatus 1 according to the first embodiment. On the other hand, if it is determined that the calibration mode setting button BM is not subjected to the touch input, the control device 12 causes the processing to proceed to Step S754.

At the Step S753, the control device 12 executes a calibration mode setting screen processing. The calibration mode setting screen processing serves to receive an operation for setting a calibration mode for a component (which will be hereinafter referred to as a selected component) corresponding to the calibration mode setting button BM subjected to the touch input at the Step S752. The calibration mode includes a zero calibration mode, a span calibration mode, and a calibration non-executing mode. In the case in which the calibration mode of the selected component is set to the zero calibration mode, the control device 12 carries out the zero calibration for the selected component in a calibration processing of Step S757 which will be described below. In the case in which the calibration mode of the selected component is set to the span calibration mode, the control device 12 carries out the span calibration for the selected component in the calibration processing of the Step S757 which will be described below. In the case in which the calibration mode of the selected component is set to the calibration non-executing mode, the control device 12 does not carry out any calibration for the selected component in the calibration processing of the Step S757 which will be described below.

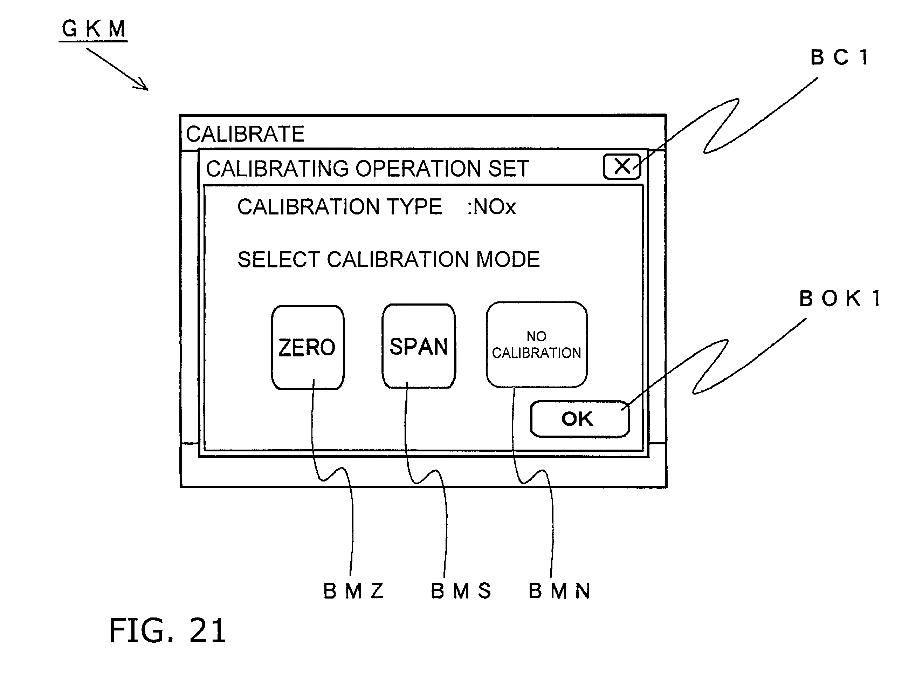

More specifically, when the calibration mode setting screen processing of the Step S753 is started, the control device 12 first displays a calibration mode setting screen image GKM. Fig. 21 is a view showing an example of the calibration mode setting screen image GKM. The control device 12 displays a zero calibration button BMZ, a span calibration button BMS, a calibration non-executing button BMN, and a Close button BC1 in the calibration mode setting screen image GKM. The zero calibration button BMZ serves to set the calibration mode of the selected component to the zero calibration mode. The span calibration button BMS serves to set the calibration mode of the selected component to the span calibration mode. The calibration non-executing button BMN serves to set the calibration mode of the selected component to the calibration non-executing mode. The Close button BC1 serves to close the calibration mode setting screen image GKM.

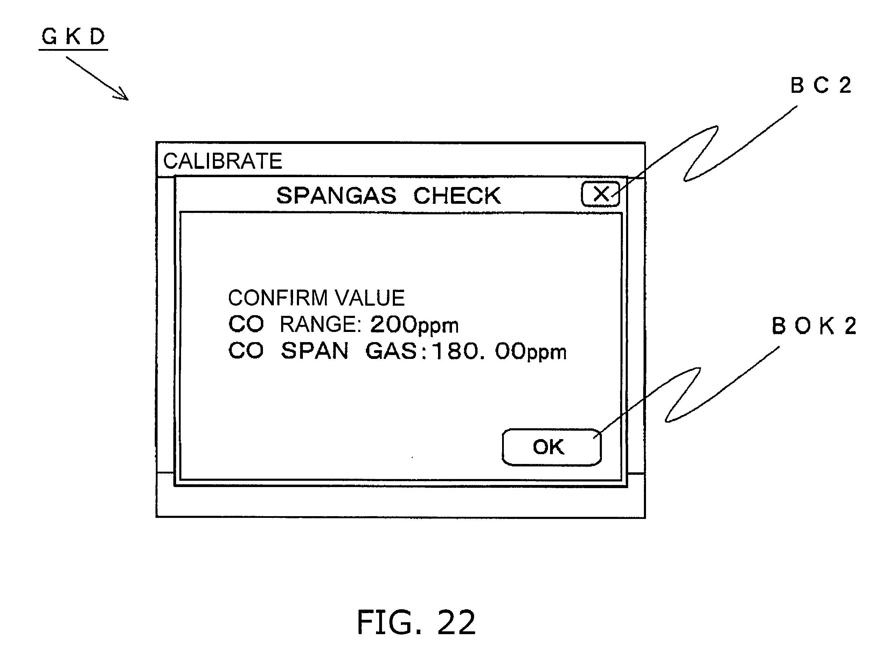

In the case in which the span calibration button BMS is subjected to an input in the calibration mode setting screen image GKM, the control device 12 displays a span gas concentration dialog screen image (an arrow A11 in Fig. 20). Fig. 22 is a view showing an example of the span gas concentration dialog screen. The control device 12 displays a concentration value and a calibration range of the span gas which are being set for the selected component in the span gas concentration dialog screen image. If an OK button BOK2 is subjected to an input in the span gas concentration dialog screen image, the control device 12 selects the span calibration mode as the calibration mode for the selected component and closes the span gas concentration dialog screen image (an arrow A12 in Fig. 20). On the other hand, if the Close button BC2 is subjected to an input in the span gas concentration dialog screen image, the control device 12 closes the span gas concentration dialog screen image without changing the calibration mode which is selected (an arrow A12 in Fig. 20). By displaying the span gas concentration dialog screen, thus, it is possible to urge the user to input and change the span gas concentration. In other words, it is possible to prevent the user from forgetting to input or change the span gas concentration, resulting in an execution of an erroneous calibration.

On the other hand, if the zero calibration button BMZ is subjected to a touch input in the calibration mode setting screen image GKM, the control device 12 selects the zero calibration mode as the calibration mode for the selected component. Similarly, if the calibration non-executing button BMN is subjected to a touch input in the calibration mode setting screen image GKM, the control device 12 selects the calibration non-executing mode. The control device 12 highlights the calibration mode which is selected through the input operation to one of the buttons in the calibration mode setting screen image GKM. More specifically, the control device 12 highlights the span calibration button BMS by changing the display color of the button.

If an OK button BOK1 is subjected to an input in the calibration mode setting screen image GKM, the control device 12 sets the calibration mode for the selected component to the mode which is selected. When completing the setting of the calibration mode, the control device 12 returns the processing to the Step S751 in Fig. 18 in which the calibration screen image GK is displayed (the arrow A10 in Fig. 20). In this case, the control device 12 displays characters representing the calibration mode set in the processing of the Step S753 in the image region of the calibration mode setting button BM. For example, characters of "ZERO", "SPAN" and "-----" are displayed in the image region of the calibration mode setting button BM when the calibration mode is set to the zero calibration mode, the span calibration mode and the calibration non-executing mode, respectively. On the other hand, if the Close button BC1 is subjected to an input in the calibration mode setting screen image GKM, the control device 12 returns the processing to the Step S751 in Fig. 18 in which the calibration screen image GK is displayed (the arrow A10 in Fig. 20), without changing the setting of the calibration mode. On the other hand, if it is determined that the Close button BC1 is not subjected to the input, the control device 12 stays in Step S753.

Returning to the description of Fig. 18, at the Step S754, the control device 12 determines whether the span gas concentration setting button BS is subjected to a touch input or not. If it is determined that the span gas concentration setting button BS is subjected to the touch input, the control device 12 causes the processing to proceed to Step S755 in which the span gas concentration setting screen image GKS is displayed (an arrow A13 in Fig. 20). On the other hand, if it is determined that the span gas concentration setting button BS is not subjected to the touch input, the control device 12 causes the processing to proceed to Step S756.

At the Step S755, the control device 12 executes a span gas concentration setting screen processing. The span gas concentration setting screen processing serves to receive an operation for inputting a value of a span gas concentration to be used in an execution of a span calibration. For example, when the processing of the Step S755 is started, the control device 12 displays the span gas concentration setting screen image for receiving the operation for inputting the value of the span gas concentration (not shown). Then, the control device 12 displays a concentration numeric button corresponding to each component item in the span gas concentration setting screen image. In the case in which the concentration numeric button is subjected to a touch input, the control device 12 displays a ten-key screen image and receives a numeric input. If it is determined that a BACK button displayed in the span gas concentration setting screen image is subjected to the touch input, the control device 12 returns the processing to the Step S751 in Fig. 18 in which the calibration screen image GK is displayed (an arrow A14 in Fig. 20). On the other hand, if it is determined that the BACK button is not subjected to the touch input, the control device 12 maintains the display of the span gas concentration setting screen image and stands by for the input to the BACK button. The processing of the Step S755 is only illustrative and the control device 12 may receive the input of the value of the span gas concentration through any arbitrary method.

Returning to the description of Fig. 18, at the Step S756, the control device 12 determines whether the calibration executing button BH is subjected to a touch input or not. If it is determined that the calibration executing button BH is subjected to the touch input, the control device 12 causes the processing to proceed to Step S757. On the other hand, if it is determined that the calibration executing button BH is not subjected to the touch input, the control device 12 causes the processing to proceed to Step S758.

At the Step S757, the control device 12 executes the calibration. More specifically, the control device 12 carries out the calibration based on the calibration mode and the span gas concentration which have been set in the above processing. The control device 12 calculates a calibration coefficient when the calibration is executed and stores the calibration coefficient in a storage device of itself. Any arbitrary conventional well-known technique may be used as a method for the calibration executed by the control device 12 and a method of calculating the calibration coefficient. When the processing of the Step S757 is completed, the control device 12 returns the processing to the Step S751 in which the calibration screen image GK is displayed. After the calibration is executed in accordance with the processing of the Step S757, calibration coefficients of the components that have been set to the zero calibration mode or the span calibration mode are updated. For example, in the case in which the calibration mode is set as shown in Fig. 19, for the zero calibration coefficient of NO, which has been set to the zero calibration mode, and the span calibration coefficients of CO, $CO_2$ and $O_2$, which have been set to the span calibration mode, these calibration coefficients are updated after the respective calibrations are carried out. On the other hand, in Fig. 19, calibration is not carried out for SO$_2$ which is set to the calibration non-executing mode. For this reason, the calibration coefficient is not updated.

The functions of the calibration coefficient calculating portion 250 and the coefficient storing portion 260 are implemented based on the storage device provided in the control device 12 and the processing of the Step S757 executed by the control device 12.

At the Step S758, the control device 12 determines whether a calibration coefficient button BP is subjected to a touch input or not. If it is determined that a calibration coefficient button BP is subjected to the touch input, the control device 12 causes the processing to proceed to Step S759 in which the coefficient rollback screen image GKR is displayed (an arrow A15 in Fig. 20). On the other hand, if it is determined that the calibration coefficient button BP is not subjected to the touch input, the control device 12 causes the processing to proceed to Step S760.

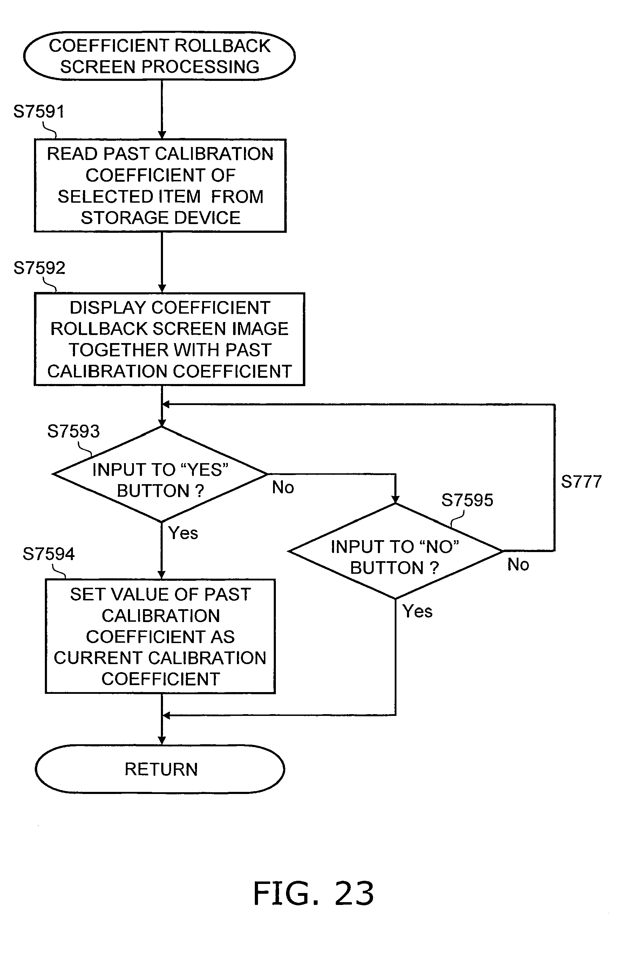

At the Step S759, the control device 12 executes a coefficient rollback screen processing. The coefficient rollback screen processing serves to receive an operation for returning a calibration coefficient to a past set value. The coefficient rollback screen processing will be described below with reference to Fig. 23. Fig. 23 is a flow chart showing an example of details of the coefficient rollback screen processing executed by the control device 12 according to the first embodiment of the present invention. When the coefficient rollback screen processing is started, the control device 12 first executes a processing of Step S7591.

At the Step S7591, the control device 12 reads, from the storage device, a past calibration coefficient corresponding to the calibration coefficient button BP selected at the Step S758. When the processing of the Step S7591 is completed, the control device 12 causes the processing to proceed to Step S7592.

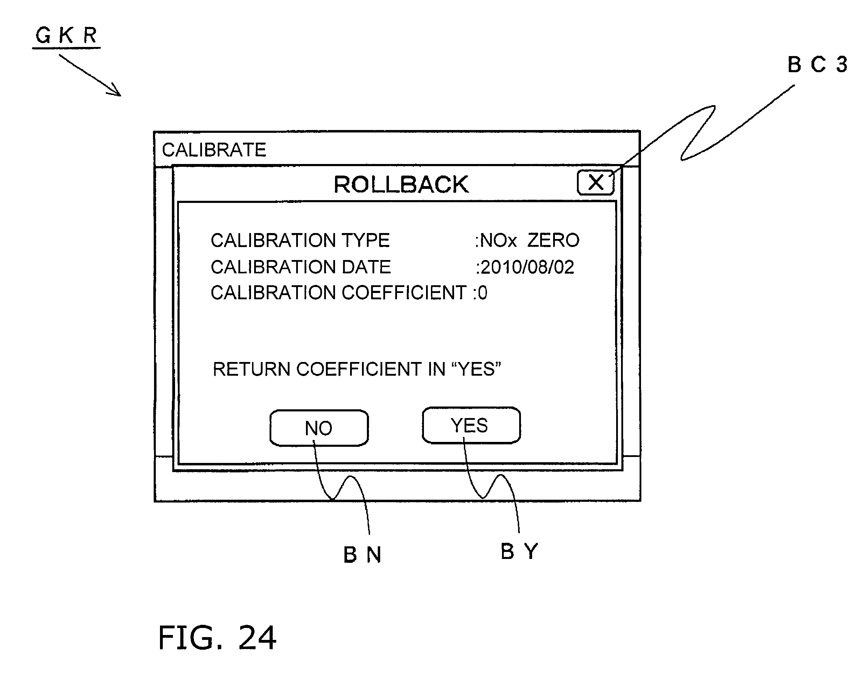

At the Step S7592, the control device 12 displays the coefficient rollback screen image together with the past calibration coefficient. Fig. 24 is a view showing an example of the coefficient rollback screen image. The control device 12 displays the value of the past calibration coefficient read at the Step S7591, a confirmation message for prompting a user to confirm whether the calibration coefficient shall be returned to the past value read at the Step S7591 and thus be reset or not, a "YES" button BY, and a "NO" button BN. When the processing of the Step S7592 is completed, the control device 12 causes the processing to proceed to Step S7593.

At the Step S7593, the control device 12 determines whether the "YES" button BY is subjected to a touch input or not. If it is determined that the "YES" button BY is subjected to the touch input, the control device 12 causes the processing to proceed to Step S7594. On the other hand, if it is determined that the "YES" button BY is not subjected to the touch input, the control device 12 causes the processing to proceed to Step S7595.

At the Step S7594, the control device 12 sets the value of the past calibration coefficient read at the Step S7591 as the value of a current calibration coefficient. When the processing of the Step S7594 is completed, the control device 12 returns the processing to the Step S751 in Fig. 18 in which the calibration screen image GK is displayed (an arrow A16 in Fig. 20).

At the Step S7595, the control device 12 determines whether the "NO" button BN is subjected to a touch input or not. If it is determined that the "NO" button BN is subjected to the touch input, the control device 12 returns the processing to the Step S751 in Fig. 18 in which the calibration screen image GK is displayed (the arrow A16 in Fig. 20). On the other hand, if it is determined that the "NO" button BN is not subjected to the touch input, the control device 12 returns the processing to the Step S7593, displays the coefficient rollback screen image GKR, and stands by until the touch input to either the "YES" button BY or the "NO" button BN is received.

The coefficient resetting portion 270 is implemented based on the coefficient rollback screen processing executed by the control device 12 and the touch panel display 11. With such a function, the calibration coefficient can easily be reset to a past set value. Accordingly, in the case in which a normal calibration cannot be carried out due to a shortage of a gas, such as a span gas or a zero gas, or the like at a measuring point, for example, it is possible to easily reset the calibration coefficient to a value obtained at a previous time when the calibration could be carried out normally.

Returning to the description of Fig. 18, at the Step S760, the control device 12 determines whether the BACK button BB3 is subjected to a touch input or not. If it is determined that the BACK button BB3 is subjected to the touch input, the control device 12 returns the processing to the Step S71 in Fig. 11 in which the menu screen image GM is displayed (an arrow A8 in Figs. 10 and 20). On the other hand, if it is determined that the BACK button BB3 is not subjected to the touch input, the control device 12 returns the processing to the Step S752.

The order of the processing of the Steps S752, S754, S756, S758 and S760 shown in Fig. 18 is not limited to the foregoing but may take any arbitrary order instead, or may be executed in a parallel manner.

Returning to the description of Fig. 11, at the Step S76, the control device 12 determines whether the BACK button BB1 is subjected to a touch input or not. If it is determined that the BACK button BB1 is subjected to the touch input, the control device 12 closes the menu screen image GM and returns the processing to the Step S3 in Fig. 5 in which the analysis result screen is displayed (the arrow A11 in Fig. 10). On the other hand, if it is determined that the BACK button BB1 is not subjected to the touch input, the control device 12 returns the processing to the Step S71.

The order of the processing of the Steps S72, S74 and Step S76 shown in Fig. 11 is not limited to the foregoing but may take any arbitrary order instead, or may be executed in a parallel manner.

Returning to the description of Fig. 5, at the Step S8, the control device 12 determines whether the power supply of the analyzing apparatus 1 is set to an OFF state or not. If it is determined that the power supply is set to the OFF state, the control device 12 ends the processing of Fig. 5. On the other hand, if it is determined that the power supply is maintained in an ON state, the control device 12 returns the processing to the Step S1 and repetitively executes the processing of each of the steps.

As described above, according to the analyzing apparatus 1 in accordance with the embodiment of the present invention, the analysis value of the desirable component item can be displayed in a single screen so as to be easily seen.

Although the description has been given to the example in which the control device 12 displays the analysis result in a list format in the analysis result display screen image as shown in Figs. 6 to 8 in the embodiment, the control device 12 may carry out a processing for displaying the analysis result in a graph format depending on an operation by a user as shown in Fig. 25. Fig. 25 is a view showing an example of a graph screen image for displaying the analysis result in a graph format. More specifically, the control device 12 displays a graph display button BG in the analysis result display screen image. When detecting a touch input to the graph display button BG, the control device 12 displays, in a graph format, a variation of the analysis value over time for each component item displayed in a list. As shown in Fig. 25, the control device 12 simultaneously displays, in the graph screen image, the list of the analysis values related to the component items displayed in the analysis result display screen image and the graph representing the variation, over time, of the analysis values related to the component items. In the graph shown in Fig. 25, a horizontal axis represents time and a vertical axis represents the analysis value related to each component item. The control device 12 displays a list display button BV on the analysis result display screen in the graph format. When detecting a touch input to the list display button BV, the control device 12 displays the analysis result display screen image in the list format. The function of the graph displaying portion 243 is implemented based on the processing executed by the control device 12 and the touch panel display 11. By allowing the analysis result to be displayed in a graph, thus, it is easy for the user to visually recognize the variation of the analysis value over time for the component item being displayed.

Although the description has been given to the example in which the analyzing apparatus 1 measures the concentrations of $CO_2$, CO, $SO_2$, $O_2$ and $NO_X$ in the sample gas and displays these analysis values (the actual measured values and the converted values) as images in the embodiment, these measured components are only illustrative, and the analyzing apparatus 1 may measure concentrations of other arbitrary components. For example, the analyzing apparatus 1 may measure the concentrations of $H_2S$, $O_3$, $NH_3$, HCl, HC, Hg, nitrogen oxide, or siloxane, and may display these analysis values as images.

(Second Embodiment)

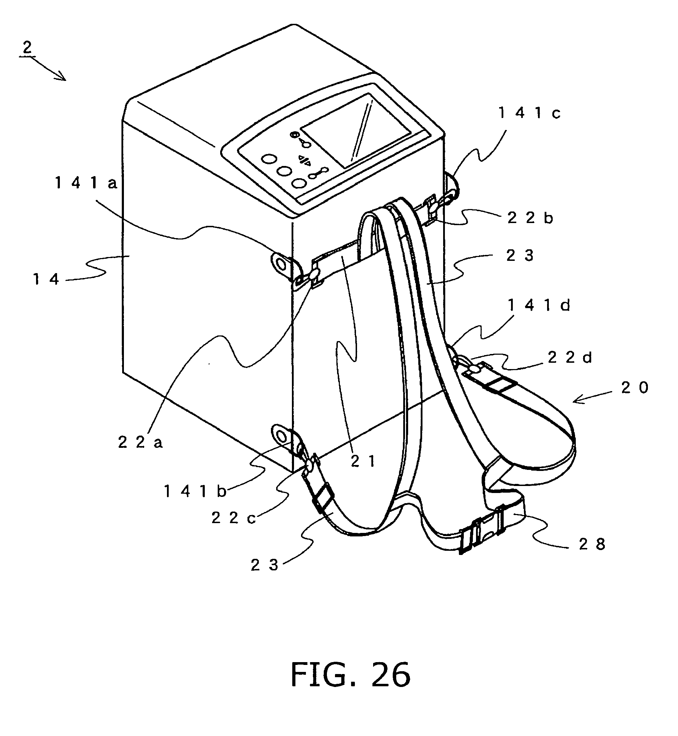

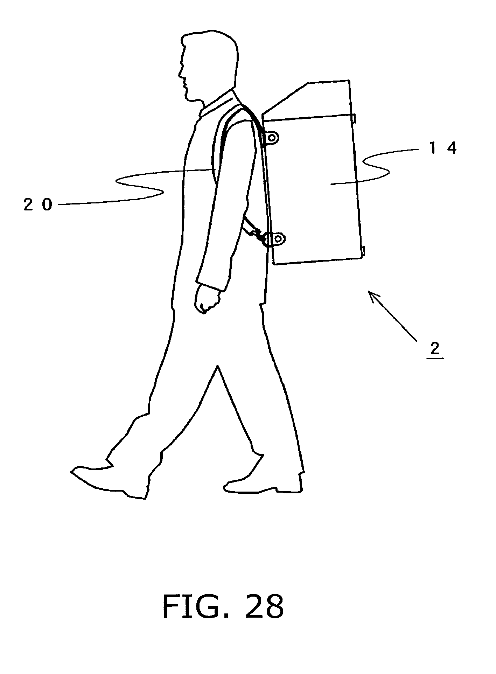

The analyzing apparatus according to the first embodiment may have a structure in which the housing 14 is further provided with a removable strap 20 as shown in Fig. 26. Fig. 26 is a perspective view showing an outer appearance of an analyzing apparatus 2 according to a second embodiment. The strap 20 is a member that may be used for carrying the housing 14 on a back of a user (see Fig. 28). The analyzing apparatus 2 according to the second embodiment can achieve a high portability with the provision of the strap 20.

In the analyzing apparatus 2 according to the second embodiment, a plurality of circular members 141 for attaching the strap 20 to the housing 14 are fixed to the housing 14 in advance. More specifically, in the case in which a surface provided with the touch panel display 11 is set to be a front surface the housing 14 includes four circular members 141 in total, that is, one on a front end of a left side surface, one on a front end of a right side surface, one on a rear end of the left side surface, and one on a rear end of the right side surface. In Fig. 26, the circular member 141 provided on the front end of the left side surface is represented by 141a, the circular member 141 provided on the rear end of the left side surface is represented by 141b, the circular member 141 provided on the front end of the right side surface is represented by 141c, and the circular member 141 provided on the rear end of the right side surface is represented by 141d. These circular members 141 serve as engagement portions for engaging the strap 20 with the housing 14.

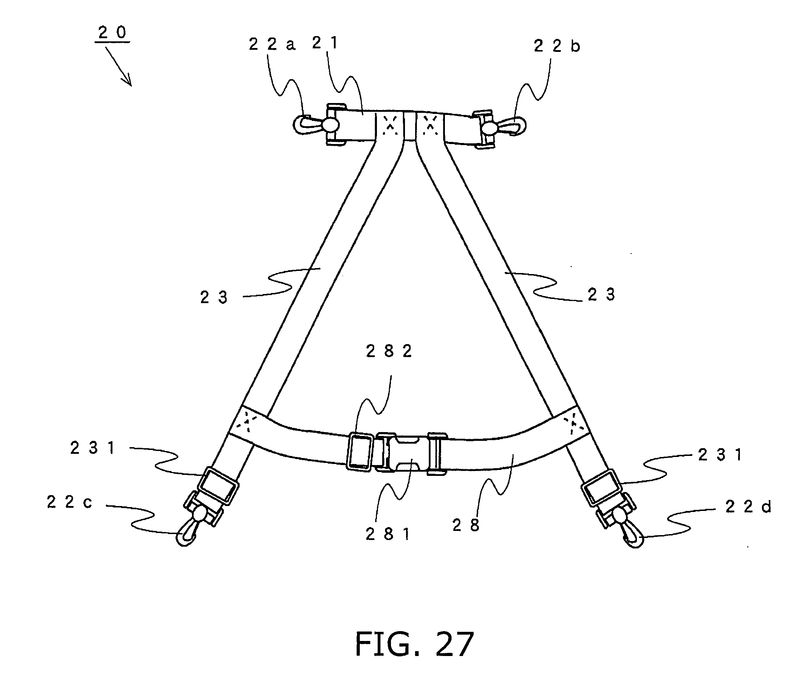

Next, a structure of the strap 20 will be described with reference to Fig. 27. Fig. 27 is a view showing the structure of the strap 20 according to the second embodiment. The strap 20 includes a coupling band 21, a knapsack belt 23, a body belt 28 and opening hooks 22.

The coupling band 21 is a band-shaped member provided with an opening hook 22 on both ends. The opening hook 22 is a member that may be removably engaged with the circular member 141.

The knapsack belt 23 is a pair of band-shaped members having an end fixed to a central part of the coupling band 21. The opening hooks 22 are provided on the other end of the knapsack belt 23. The knapsack belt 23 is a portion that comes into contact with a shoulder portion of the user when in use. Moreover, the knapsack belt 23 includes an adjuster mechanism 231 for changing a length of the knapsack belt 23 itself. An arbitrary conventionally well-known mechanism may be used for the adjuster mechanism 231.

The body belt 28 is a band-shaped member which has both ends fixed to respective band-shaped members of the knapsack belt 23. A buckle portion 281 is provided in a central part of the body belt 28, and the body belt 28 is constructed to be dividable at the buckle portion 281. Moreover, the body belt 28 is provided with an adjuster mechanism 282 for changing a length of the body belt 28 itself. An arbitrary conventionally well-known mechanism may be used for the adjuster mechanism 282.

The opening hooks 22 provided in the strap 20 serve as engaging portions which can be removably engaged with the circular members 141, respectively. In the drawings, the opening hook 22 provided on one end of the coupling band 21 is represented by 22a, the opening hook 22 provided on the other end of the coupling band 21 is represented by 22b, the opening hook 22 provided on one band-shaped member of the knapsack belts 23 is represented by 22c, and the opening hook 22 provided on the other band-shaped member of the knapsack belt 23 is represented by 22d.

Although the coupling belt 21 and the knapsack belt 23 may be formed by soft members fabricated through weaving of nylon fiber, for example, they may be formed by any arbitrary materials. Moreover, the opening hook 22 may be constituted by any metal or synthetic resin.

When the opening hook 22a and the circular member 141a, the opening hook 22b and the circular member 141c, the opening hook 22c and the circular member 141b, and the opening hook 22d and the circular member 141d are respectively engaged with each other, the strap 20 and the housing 14 can be coupled to each other in the mode shown in Fig. 26. If the knapsack belt 23 is carried onto the shoulder in a state in which the strap 20 and the housing 14 are thus coupled to each other, the user can carry the analyzing apparatus 2 on his (her) back as shown in Fig. 28. Fig. 28 is a view showing a state in which the user carries the analyzing apparatus 2 using the strap 20 according to the second embodiment. Thus, the user can freely use both hands while carrying the analyzing apparatus 2 on his (her) back.

By dividing the body belt 28 through the buckle portion 281, the user can carry the analyzing apparatus 2 onto his (her) back by having his (her) arms put through the knapsack belt 23. Moreover, the user carries the analyzing apparatus 2 onto his (her) back and then brings the body belt 28 into a connected state again through the buckle portion 281. Consequently, the user can carry the housing of the analyzing apparatus on his (her) back in a closely fixed state to the body portion of the user.

Although the description has been given to the example in which the opening hook 22 and the circular member 141 engaged with each other are used as members for coupling the strap to the housing in the second embodiment, any conventionally well-known members which can be engaged with each other may be used in place of the opening hook 22 and the circular member 141.

The analyzing apparatus according to the present invention is useful as an analyzing apparatus which can display analysis values so as to allow a user to easily and visually recognize an analysis value related to a desired component item.

## Claims

1. An analyzing apparatus (1, 2) for analyzing a sample gas and displaying an analysis result in an image, comprising:

   an analyzing portion (210) for measuring and analyzing a concentration of a predetermined component in the sample gas and calculating analysis values related to items of the predetermined component;
   a displaying portion (220) for displaying the analysis values in an image;
   an operation inputting portion (230) for receiving an input operation by a user; and
   an analysis result display control portion (240) for displaying the analysis values related to each of the items of the predetermined component on a screen of the displaying portion (220) in a displaying mode depending on the input operation received by the operation inputting portion (230),
   wherein the analysis result display control portion (240) includes:

   a display number setting portion (241) for setting a number of the analysis values to be displayed on the displaying portion (220) depending on the input operation received by the operation inputting portion (230); and
   a display order setting portion (242) for setting a display order of the analysis values to be displayed on the displaying portion (220) depending on the input operation received by the operation inputting portion (230).

2. The analyzing apparatus (1, 2) according to claim 1, wherein the analysis result display control portion (240) further includes a graph displaying portion (243) for displaying, on the displaying portion (220), a graph representing a variation, over time, of the analysis values being displayed on the displaying portion (220) together with the analysis values depending on the input operation received by the operation inputting portion (230).

3. The analyzing apparatus (1, 2) according to claim 1 or 2, wherein the analyzing portion (210) further includes:

an actual measuring portion (211) for measuring concentrations of predetermined first and second components contained in the sample gas as an actual measured value of the predetermined first component and an actual measured value of the predetermined second component respectively; and

a converting portion (212) for calculating a converted value of the predetermined first component based on the actual measured value of the predetermined first component and the actual measured value of the predetermined second component which are obtained by the actual measuring portion (211), and

the analysis values include at least the converted value of the predetermined first component, and

the analysis values further include the actual measured value of the predetermined first component and/or the actual measured value of the predetermined second component.

4. The analyzing apparatus (1, 2) according to any one of claims 1 to 3, wherein the analysis result display control portion (240) enlarges a font size of the analysis values displayed on the displaying portion (220) when the number of the analysis values displayed is decreased.

1

1 4 1

1 4 1

1 4 1

1 4 1

1 1

1 4

# FIG. 1

1

11

12

13

CONTROL
DEVICE

ANALYZING
UNIT

111        112

14

FIG. 2

FIG. 3

FIG. 4

EP 2 500 711 A2

```
                    ┌─────────────────────┐
                    │       START         │
                    └─────────────────────┘
                               │
S1 ─┤  ACQUIRE ANALYSIS RESULT              │
                               │
S2 ─┤  CALCULATE CONVERTED VALUE            │
                               │
S3 ─┤  DISPLAY ANALYSIS RESULT SCREEN       │
                               │
S4        INPUT TO DISPLAY
          NUMBER SWITCHING BUTTON ?   ── No
                               │ Yes
S5 ─┤  DISPLAY NUMBER SWITCH PROCESSING     │
                               │
S6        INPUT TO MENU BUTTON ?      ── No
                               │ Yes
S7 ─┤  MENU SCREEN PROCESSING              │
                               │
S8        POWER SUPPLY OFF ?   No
                               │ Yes
                    ┌─────────────────────┐
                    │        END          │
                    └─────────────────────┘
```

FIG. 5

GR 5

Bch

BG

MEASURE 1/4　　SD 2011/01/18 08:46

FLOW 1.6 L/min　RANGE

NO　316.7 ppm　500

SO₂　333.9 ppm　500

CO　2333 ppm　5000

CO₂　10.05 vol%　20

O₂　9.52 vol%　25

MENU

BM　BL　BR

FIG. 6

GR3

Bch

BG

MEASURE 1/4                    [SD] 2011/01/18 08:46

[∿] [▷]        FLOW 1.6 L/min        RANGE

NO        **316.7** ppm    [500]

SO$_2$      **333.9** ppm    [500]

CO        **2333** ppm    [5000]

(⏻)  MENU  [📷]  ⚠  ◁  ▷  📖

BM                    BL        BR

FIG. 7

EP 2 500 711 A2

GR1

Bch

BG

MEASURE 1/4     SD 2011/01/18 08:46

FLOW 1.6 L/min    RANGE

NO

500

# 316.7

ppm

MENU ⚠ ◁ ▷

BM     BL     BR

FIG. 8

DISPLAY NUMBER
SWITCH PROCESSING

S51 FIVE-COMPONENT
DISPLAY FORMAT IS USED
IN CURRENT SCREEN
IMAGE ?

No

Yes

S52 CHANGE TO
THREE-COMPONENT
DISPLAY FORMAT

S53 THREE-COMPONENT
DISPLAY FORMAT IS USED
IN CURRENT SCREEN
IMAGE ?

No

Yes

S54 CHANGE TO
ONE-COMPONENT
DISPLAY FORMAT

S55 CHANGE TO
FIVE-COMPONENT
DISPLAY FORMAT

RETURN

FIG. 9

FIG. 10

MENU SCREEN
PROCESSING

DISPLAY MENU
SCREEN IMAGE — S71

INPUT TO
DISPLAY ORDER
CHANGING
BUTTON ? — S72

Yes

No

DISPLAY ORDER
CHANGING SCREEN
PROCESSING — S73

INPUT TO
CALIBRATION
BUTTON ? — S74

Yes

No

CALIBRATION SCREEN
PROCESSING — S75

S76

INPUT TO BACK
BUTTON ?

No

Yes

RETURN

FIG. 11

26

GM

BJS

[SD] 2011/01/18  08:47

| | |
|---|---|
| COMPONENT DISPLAY ORDER SET | CALIBRATION |
| DATA STORAGE | NO ELECTROMAGNETIC VALVE RESET |
| SD CARD FORMAT | |
| | |
| | |

BJC

BJ

BACK   MENU   ∧   ∨   ◁   ▷   ▭

BB1   BM   BU   BD   BL   BR

FIG. 12

EP 2 500 711 A2

COMPONENT DISPLAY
ORDER SETTING SCREEN

S731 — DISPLAY COMPONENT
DISPLAY ORDER
SETTING SCREEN IMAGE

S732
TOUCH INPUT
TO COMPONENT ITEM
BUTTON ?
No

Yes

S733
SET SELECTED ITEM

S734
INPUT TO
UPWARD ARROW
BUTTON ?
No

Yes

S736
INPUT TO
DOWNWARD ARROW
BUTTON ?
No

Yes

S735
MOVE UP DISPLAY
ORDER OF SELECTED
ITEM BY ONE

S737
MOVE DOWN DISPLAY
ORDER OF SELECTED
ITEM BY ONE

S738
INPUT TO BACK
BUTTON ?
No

Yes

RETURN

FIG. 13

G J

COMPONENT DISPLAY ORDER SET 1/2 [SD] 2011/01/18 08:47

| 01: NO | 06: CONVERTED NO |
| 02: $SO_2$ | 07: CONVERTED $SO_2$ |
| 03: CO | 08: CONVERTED CO |
| 04: $CO_2$ | 09: AVERAGE NO |
| 05: $O_2$ | 10: AVERAGE $SO_2$ |

BK

BACK  MENU  ∧  ∨  ◁  ▷  📖

B B 2   B M   B U  B D   B L   B R

FIG. 14

EP 2 500 711 A2

FIG. 15

FIG. 16

GJ

COMPONENT DISPLAY ORDER SET 1/2 [SD] 2011/01/18 08:47

| 01: | NO |
| 02: | CONVERTED NO |
| 03: | $SO_2$ |
| 04: | CO |
| 05: | $CO_2$ |

| 06: | $O_2$ |
| 07: | CONVERTED $SO_2$ |
| 08: | CONVERTED CO |
| 09: | AVERAGE NO |
| 10: | AVERAGE $SO_2$ |

BKS

BK

BACK   MENU   ∧   ∨   ◁   ▷   ▯▯

BU

BD

EP 2 500 711 A2

G R 5

FIG. 17

MEASURE 1/4                    SD 2011/01/18 08:46

| ⌐∿⌐ | ▷ | FLOW 1.6 L/min | RANGE |

| NO | 316.7 ppm | 500 |
| CONVERTED NO | 316.7 ppm | 500 |
| SO₂ | 333.9 ppm | 500 |
| CO | 2333 ppm | 5000 |
| CO₂ | 10.05 vol% | 20 |

⏻  MENU  📷  ⚠  ◁  ▷  📖

CALIBRATION SCREEN PROCESSING

S751 — DISPLAY CALIBRATION SCREEN IMAGE

S752 INPUT TO CALIBRATION MODE SETTING BUTTON ?

Yes → S753 CALIBRATION MODE SETTING SCREEN PROCESSING

No

S754 INPUT TO SPAN GAS CONCENTRATION SETTING BUTTON ?

Yes → S755 SPAN GAS CONCENTRATION SETTING SCREEN PROCESSING

No

S756 INPUT TO CALIBRATION EXECUTING BUTTON ?

Yes → S757 EXECUTE CALIBRATION

No

S758 INPUT TO CALIBRATION COEFFICIENT BUTTON ?

Yes → S759 COEFFICIENT ROLLBACK SCREEN PROCESSING

No

S760 INPUT TO BACK BUTTON ?

No

Yes

RETURN

FIG. 18

FIG. 19

```
                    ┌─────────────────────────┐
                    │   MENU SCREEN IMAGE     │
                    └─────────────────────────┘
                       ▲                │
                       │  ┌──────────────────┐
                 A8  ───┤  │  CALIBRATION     │
                       │  │    BUTTON        │
                       │  └──────────────────┘
              ┌──────────┐              │
              │  BACK    │              │    A7
              │ BUTTON   │   ───── A7   ▼
              └──────────┘
      ┌──────────────────────────────────────────────────────┐
      │            CALIBRATION SCREEN IMAGE                   │
      └──────────────────────────────────────────────────────┘
```

CALIBRATION MODE SETTING BUTTON

SPAN GAS CONCENTRATION SETTING BUTTON

CALIBRATION COEFFICIENT BUTTON

A10   A14   16

OK / CLOSE BUTTON

BACK BUTTON

YES / NO BUTTON

A9   A13   A15

CALIBRATION MODE SETTING SCREEN IMAGE

SPAN GAS CONCENTRATION SETTING SCREEN IMAGE

COEFFICIENT ROLLBACK SCREEN IMAGE

A12

OK / CLOSE BUTTON

SPAN CALIBRATION BUTTON

A11

SPAN GAS CONCENTRATION DIALOG

# FIG. 20

GKM

EP 2 500 711 A2

BC1

CALIBRATE

| CALIBRATING OPERATION SET | ⊠ |

CALIBRATION TYPE    :NOx

SELECT CALIBRATION MODE

BOK1

| ZERO | SPAN | NO CALIBRATION |

OK

BMZ    BMS    BMN

FIG. 21

GKD

BC 2

CALIBRATE

SPANGAS CHECK                    ⌧

CONFIRM VALUE
CO  RANGE: 200ppm
CO  SPAN  GAS:180. 00ppm

BOK 2

OK

FIG. 22

EP 2 500 711 A2

COEFFICIENT ROLLBACK
SCREEN PROCESSING

S7591

READ PAST CALIBRATION
COEFFICIENT OF
SELECTED ITEM FROM
STORAGE DEVICE

S7592

DISPLAY COEFFICIENT
ROLLBACK SCREEN IMAGE
TOGETHER WITH PAST
CALIBRATION COEFFICIENT

S7593

INPUT TO "YES"
BUTTON ?

No

S7595

INPUT TO "NO"
BUTTON ?

No

S777

Yes

S7594

SET VALUE OF PAST
CALIBRATION
COEFFICIENT AS
CURRENT CALIBRATION
COEFFICIENT

Yes

RETURN

FIG. 23

EP 2 500 711 A2

**G K R**

**B C 3**

```
CALIBRATE

        ROLLBACK                    [X]

    CALIBRATION TYPE         :NOx  ZERO
    CALIBRATION DATE         :2010/08/02
    CALIBRATION COEFFICIENT :0


    RETURN COEFFICIENT IN "YES"


        [   NO   ]        [   YES   ]
```

**B N**          **B Y**

# FIG. 24

FIG. 25

EP 2 500 711 A2

FIG. 26

FIG. 27

EP 2 500 711 A2

FIG. 28

**EP 2 500 711 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7318374 A